# EUROPÄISCHE PATENTANMELDUNG

(11) **EP 2 064 953 A1**
(43) Veröffentlichungstag der Anmeldung: **03.06.2009**
(21) Anmeldenummer: 07023140.2
(22) Anmeldetag: 29.11.2007
(51) Int. Cl.: A01N 47/36, A01N 47/38, A01N 43/50, A01N 43/54, A01N 43/56, A01N 43/653, A01N 25/32, A01P 13/00

(54) **Herbizid-Azol-Kombination**

(71) Anmelder: Bayer CropScience AG, 40789 Monheim (DE)
(72) Erfinder: Brink, Arne, Dr., 40764 Langenfeld (DE); Pontzen, Rolf, Dr., 42799 Leichlingen (DE); Dutzmann, Stefan, Dr., 40764 Langenfeld (DE)

(57) **Zusammenfassung**

Herbizid-Azol-Kombination mit einem Gehalt an Komponenten (A) und (B) weisen verbesserte Effekte auf, wobei
(A) ein oder mehrere herbizide Wirkstoffe aus der Gruppe der ALS-Inhibitoren bedeutet, und
(B) ein oder mehrere agrochemisch wirksame Azol-Verbindungen aus der Gruppe der Triazole, Pyrazole und Triazolinthione bedeutet.

## Beschreibung

Die Erfindung liegt auf dem technischen Gebiet der Pflanzenschutzmittel, die gegen Schadpflanzen z.B. in Pflanzenkulturen eingesetzt werden können und betrifft eine Kombination von speziellen Herbiziden mit speziellen agrochemisch wirksamen Azol-Verbindungen.

Aus der Druckschrift WO 92/11761 sind Zusammensetzungen bekannt, welche ein Herbizid a) und ein Biocid b) enthalten, sowie ein Antidot c), welches einer durch das Biocid b) erhöhten phytotoxischen Wirkung des Herbizids a) entgegenwirkt.

Die Aufgabe der vorliegenden Erfindung bestand darin, eine verbesserte herbizid wirksame Wirkstoffkombination zur Verfügung zu stellen.

Überraschenderweise wurde nun gefunden, daß Herbizide aus der Gruppe der ALS-Inhibitoren in Kombination mit speziellen agrochemischen Wirkstoffen aus der Gruppe der Azole in besonders günstiger Weise zusammenwirken und beispielsweise synergistische Effekte zeigen.

Gegenstand der Erfindung ist somit eine Herbizid-Azol-Kombinatian mit einem Gehalt an Komponenten A) und B), wobei
A) ein oder mehrere herbizide Wirkstoffe aus der Gruppe der ALS-Inhibitoren bedeutet, und
B) ein oder mehrere agrochemisch wirksame Azol-Verbindungen aus der Gruppe der Triazole, Pyrazole und Triazolinthione bedeutet.

Als ALS-Inhibitoren A) kommen beispielsweise Verbindungen aus der Gruppe der Imidazolinone, Pyrimidinyloxy-pyridincarbonsäure-Derivate, Pyrimidyloxybenzoesäure-Derivate oder der Sulfonamide in Frage, wie Triazolopyrimidinsulfonamide, Sulfonylaminocarbonyltriazolinone oder Sulfonylharnstoffe. Als Sulfonamide bevorzugt sind Phenylsulfonamide, Heteroarylsulfonamide und Sulfondiamide (z.B. Cyclosulfamuron oder (Alkyisulfonyl)alkylamino-sulfonamide wie Amidosulfuron).

Als Phenylsulfonamide A) kommen beispielsweise Verbindungen aus der Gruppe der Phenylsulfonylaminocarbonyltriazolinone oder der Phenylsulfonylhamstoffe, bevorzugt aus der Gruppe der Phenylsuffonylharnstoffe in Frage. Unter dem Begriff Phenylsulfonylharnstoffe werden auch solche Sulfonylharnstoffe verstanden, bei denen die Phenylgruppe über einen Spacer wie CH₂, O oder NH an die Sulfongruppe (SO₂) gebunden ist. Beispiele für Phenylsulfonylaminocarbonyltriazolinone sind Flucarbazone oder Propoxycarbazone und/oder deren Salze. Die ALS-Inhibitoren A) sind kommerziell erhältlich und/oder nach bekannten Verfahren herstellbar wie sie z.B. beschrieben sind in EP-A-7687, EP-A-30138, US 5,057,144 und US 5,534,486.

Als Phenylsulfonamide kommen beispielsweise Phenylsulfonamide der allgemeinen Formel (I) und/oder deren Salze in Frage,

Rα-(A)ₘ-SO₂-NR^{β}-CO-(NR^{γ})ₙ-R^{δ} (I)

worin
- R^{α}: ein Phenylrest ist, der unsubstituiert oder substituiert ist, und wobei der Phenylrest inklusive Substituenten 1-30 C-Atome, vorzugsweise 1-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z,B. unsubstituiertes oder substituiertes C₁-C₆-Alkyl, vorzugsweise ein Wasserstoffatom oder Methyl,
- A: gleich CH₂, O oder NH, vorzugsweise O, ist,
- m: gleich Null oder 1,
- n: gleich Null oder 1, vorzugsweise gleich 1, und
- R^{δ}: ein heterocyclischer Rest wie ein Pyrimidinylrest, ein Triazinylrest oder ein Triazolinonrest ist.

Bevorzugte Phenylsulfonamide sind Phenylsulfonylharnstoffe, beispielsweise Phenylsulfonylharnstoffe der allgemeinen Formel (II) und/oder deren Salze,

R^{α}-(A)ₘ-SO₂-NR^{β}-CO-NR^{γ}-R^{δ} (II)

worin
- R^{α}: ein Phenylrest ist, der unsubstituiert oder substituiert ist, und wobei der Phenylrest inklusive Substituenten 1-30 C-Atome, vorzugsweise 1-20 C-Atome aufweist,
- R^{β}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆Alkyl, vorzugsweise ein Wasserstoffatom oder Methyl,
- R^{γ}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A: gleich CH₂. O oder NH, vorzugsweise O, ist,
- m: gleich Null oder 1, und
- R^{δ}: ein heterocyclischer Rest wie ein Pyrimidinylrest oder ein Triazinylrest ist.

Bevorzugt sind Phenylsulfonylharnstoffe der Formel (III) und/oder deren Salze, 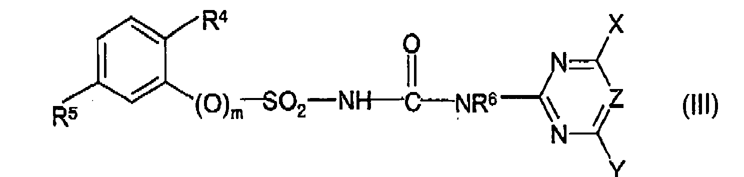 worin
- R⁴: C₁-C₄-Alkoxy, vorzugsweise C₂-C₄-Alkoxy, oder CO-R^{a} ist, worin R^{a} gleich OH, C₁-C₄-Alkoxy oder NR^{b}R^{c} ist, worin R^{b} und R^{c} unabhängig voneinander gleich oder verschieden H oder C₁-C₄-Alkyl sind,
- R⁵: Halogen, vorzugsweise lod, oder (A)ₙ-NR^{d}R^{e} ist, worin n gleich Null oder 1 ist, A eine Gruppe CR'R" ist, worin R' und R" unabhängig voneinander gleich oder verschieden H oder C₁-C₄-Alkyl sind, R^{d} gleich H oder C₁-C₄-Alkyl ist und R^{e} ein Acylrest wie Formyl oder C₁-C₄-Alkyl-Sulfonyl ist, und R⁵ für den Fall, daß R⁴ gleich C₁-C₄-Alkoxy, vorzugsweise C₂-C₄-Alkoxy, bedeutet auch H sein kann,
- R⁶: H oder C₁-C₄-Alkyl ist,
- m: gleich Null oder 1 ist,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆-Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁-C₄-Alkylthio substituiert ist, vorzugsweise C₁-C₄-Alkyl oder C₁-C₄-Alkoxy, und
- Z: gleich CH oder N ist.

Besonders bevorzugt sind Phenylsulfonylharnstoffe der allgemeinen Formel (III) und/oder deren Salze, worin
a) R⁴ gleich CO-(C₁-C₄-Alkoxy) ist, R⁵ gleich Halogen, vorzugsweise Jod ist, oder R⁵ gleich CH₂-NHR^{e} ist, worin R^{e} ein Acylrest, vorzugsweise C₁-C₄-Alkyl-Sulfonyl ist, und m gleich Null ist,
b) R⁴ gleich CO-N(C₁-C₄-Alkyl)₂, R⁵ gleich NHR^{e} ist, worin R^{e} ein Acylrest, vorzugsweise Formyl ist, und m gleich Null ist, oder
c) R⁴ gleich C₂-C₄-Alkoxy, R⁵ gleich H und m gleich 1 ist,

Typische Phenylsulfonylharnstoffe sind unter anderem die nachfolgend aufgeführten Verbindungen und deren Salze wie die Natriumsalze; Bensulfuron-methyl, Chlorimuron-Ethyl, Chlorsulfuron, Cinosulfuron, Cyclosulfamuron, Ethametsulfuronmethyl, Ethoxysulfuron und dessen Natriumsalz, Metsulfuron-methyl, Oxasulfuron, Primisulfuron-methyl, Prosulfuron, Sulfometuron-methyl, Triasulfuron, Tribenuron-methyl, Triflusulfuron-methyl, Tritosulfuron, lodosulfuron-methyl und dessen Natriumsalz, Mesosulfuron-methyl und dessen Natriumsalz und Foramsulfuron und dessen Natriumsalz.

Besonders bevorzugte Phenylsulfonamide sind: lodosulfuron-methyl (A1.1) und dessen Salze wie das Natriumsalz (A1.2), Mesosulfuron-methyl (A2.1) und dessen Salze wie das Natriumsalz (A2.2), Foramsulfuron (A3.1) und dessen Salze wie das Natriumsalz (A3.2), Flucarbazone (A4.1) und dessen Salze wie das Natriumsalz (A4.2), Propoxycarbazone (A5.1) und dessen Salze wie das Natriumsalz (A5.2) und Ethoxysulfuron (A6.1) und dessen Salze wie das Natriumsalz (A6.2), Metsulfuron-methyl (A7.1) und dessen Salze wie das Natriumsalz (A7.2), Tribenuron-methyl (A8.1) und dessen Salze wie das Natriumsalz (A8.2), Chlorsulfuron (A9.1) und dessen Salze wie das Natriumsalz (A9.2).

Als Heteroarylsulfonamide A) kommen beispielsweise Verbindungen aus der Gruppe der Heteroarylsulfonylaminocarbonyltriazolinone oder der Heteroarylsulfonylhamstoffe, bevorzugt aus der Gruppe der Heteroarylsulfonylharnstoffe in Frage. Unter dem Begriff Heteroarylsulfonylharnstoffe werden auch solche Sulfonylharnstoffe verstanden, bei denen die Heteroarylgruppe über einen Spacer wie CH₂, O oder NH an die Sulfongruppe (SO₂) gebunden ist.

Als Heteroarylsulfonamide kommen beispielsweise Sulfonamide der allgemeinen Formel (IV) und/oder deren Salze in Frage,

R^{α'}-(A')ₘ-SO₂-NR^{β'}-CO-(NR^{γ}')_{n'}-R^{δ'} (IV)

worin
- R^{α}: ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆₋Alkyl, vorzugsweise ein Wasserstoffatom oder Methyl,
- R^{γ}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1,
- n': gleich Null oder 1, vorzugsweise gleich 1, und
- Rδ': ein heterocyclischer Rest wie ein Pyrimidinylrest, ein Triazinylrest oder ein Triazolinonrest ist.

Bevorzugte Heteroarylsulfonamide sind Heteroarylsulfonylharnstoffe, beispielsweise Sulfonylharnstoffe der allgemeinen Formel (V) und/oder deren Salze,

R^{α'}-(A')_{m'}-SO₂-NR^{β'}-CO-NR^{γ'}-R^{δ'} (V)

worin
- R^{α'}: ein Heteroarylrest ist, der unsubstituiert oder substituiert ist, und wobei der Heteroarylrest inklusive Substituenten 1-30 C-Atome, vorzugsweise 1-20 C-Atome aufweist,
- R^{β}': ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- R^{γ'}: ein Wasserstoffatom oder ein Kohlenwasserstoffrest ist, der unsubstituiert oder substituiert ist und inklusive Substituenten 1-10 C-Atome aufweist, z.B. unsubstituiertes oder substituiertes C₁-C₆-Alkyl, vorzugsweise ein Wasserstoffatom oder Methyl,
- A': gleich CH₂, O oder NH, vorzugsweise O, ist,
- m': gleich Null oder 1, und
- R^{δ}': ein heterocyclischer Rest wie ein Pyrimidinylrest oder ein Triazinylrest ist.

Besonders bevorzugt sind Heteroarylsulfonamide der nachfolgend genannten Formel (VI), 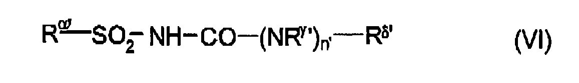 , worin
- R^{α}': ein substituierter Heteroarylrest, wie substituiertes Pyridyl, Thienyl, Pyrazolyl oder Imidazolyl,
- R^{γ}': H, (C₁-C₃)Alkyl, optional substituiert mit Halogen (F, C, Br, I) oder (Halo)Alkoxy (C₁-C₃), bevorzugt H oder Methyl,
- für n': gleich 1, R^{δ}' ein Pyrimidinylrest oder ein Triazinylrest ist, vorzugsweise 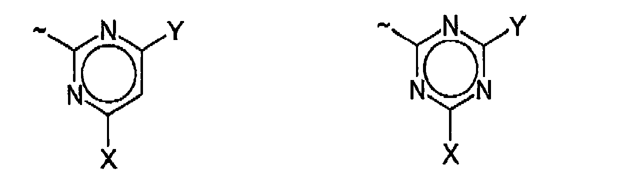
und für n' gleich Null, R^{δ}' ein Triazolinonrest ist, vorzugsweise 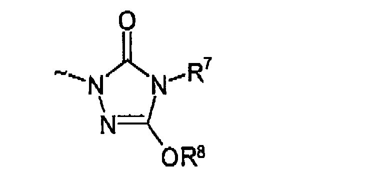
- R⁷: (C₁-C₁₀)Alkyl, welches optional substituiert ist mit Halogen (F, Cl, Br, I) oder (C₁-C₃)Halo-Alkyl,
- R⁸: (C₁-C₁₀)Alkyl, welches optional substituiert ist mit Halogen (F, Cl, Br, I) oder (C₁-C₃)Halo-Alkyl,
- X und Y: unabhängig voneinander gleich oder verschieden Halogen oder NR'R", worin R' und R" gleich oder verschieden H oder C₁-C₄-Alkyl sind, oder C₁-C₆-Alkyl, C₁-C₆-Alkoxy, C₁-C₆-Alkylthio, C₃-C₆-Cycloalkyl, C₂-C₆-Alkenyl, C₂-C₆-Alkynyl, C₃-C₆Alkenyloxy oder C₃-C₆-Alkynyloxy sind, wobei jeder der acht letztgenannten Reste unsubstituiert oder durch einen oder mehrere Reste aus der Gruppe Halogen, C₁-C₄-Alkoxy und C₁₋C₄-Alkylthio substituiert ist, vorzugsweise C₁-C₄-Alkyl oder C₁-C₄-Alkoxy.

Besonders bevorzugt ist R^{α}' gleich 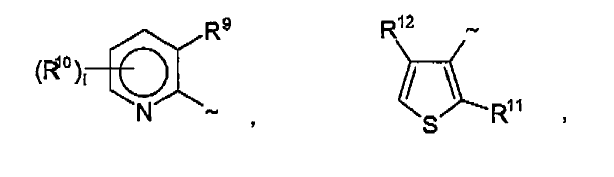 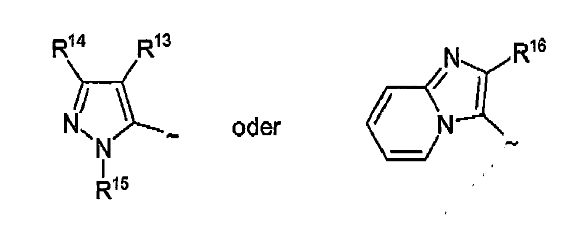 , worin
- R⁹: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)Alkoxycarbonyl, (C₂-C₆)Alkenyloxycarbonyl, (C₂-C₆)Alkinyloxycarbonyl, CONR'R", (C₁-C₆)Halo-Nkyl, (C₁-C₆)Halo-Alkoxy, (C₂-C₈)Halo-Alkenyloxy, (C₂-C₆)Halo-Alklnyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl,
- R¹⁰: H, (C₁-C₃)Alkyl, (C₁-C₃)Alkoxy, (C₁-C₃)Halo-Alkyl, (C₁-C₃)Halo-Alkoxy oder Halogen (F, Cl, Br, I),
- I: Null oder 1,
- R¹¹: (C₁-C₆)Alkyl, (C₁-C₆)Alkoxy, (C₂-C₆)Alkenyloxy, (C₂-C₆)Alkinyloxy, (C₁-C₆)Alkylsulfonyl, (C₁-C₆)Alkylcarbonyl, (C₁-C₆)AlkoxyrCarbonyl, (C₂-C₆)Alkenyloxycarbonyl, (C₂-C₆)Alkinyloxycarbonyl, (C₁-C₆)Halo-Alkyl, (C₁-C₆)Halo-Alkoxy, (C₂-C₆)Halo-Alkenyloxy, (C₂-C₆)Halo-Alkinyloxy, (C₁-C₆)Halo-Alkylsulfonyl, (C₁-C₆)Halo-Alkylearbonyl, (C₁-C₆)Halo-Alkoxycarbonyl, (C₂-C₆)halo-Alkenyloxycarbonyl, (C₂-C₆)Halo-Alkinyloxycarbonyl, CONR'R",
- R¹²: Halogen (F, Cl, Br, I), (C₁-C₆)Alkyl, (C₁-C₆)Alkoxy. (C₁-C₆)Alkylsulfonyl, (C₁-C₆)Alkoxycarbonyl, (C₂-C₆)Alkenyloxycarbonyl, (C₂-C₆)Alkinytoxycarbonyl, (C₁-C₆)Halo-Alkyl, (C₁-C₆)Halo-Alkoxy, (C₁-C₆)Halo-Alkylsulfonyl, (C₁-C₆)Halo-Alkoxycarbonyl, (C₂-C₆)Halo-Alkenyloxycarbonyl, (C₂-C₆)Halo-Alkinyloxycarbonyl,
- R¹³: (C₁-C₆)Alkoxycarbonyl, (C₂-C₆)Alkenyloxycarbonyl, (C₂-C₆)Alkinyloxycarbonyl, (C₁-C₆)Alkyl, (C₁-C₆)Alkoxy, (C₁-C₆)Alkylsulfonyl, (C₁-C₆)Halo-Alkoxycarbonyl, (C₂-C₆)Halo-Alkenyloxycarbonyl, (C₂-C₆)Halo-Alkinyloxycarbonyl, (C₁-C₆)Halo-Alkyl, (C₁-C₆)Halo-Alkoxy, (C₁-C₆)Halo-Alkylsulfonyl, Halogen (F, Cl, Br, I), CONR'R", oder R¹³ ist ein heterocylischer Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann, besonders bevorzugt

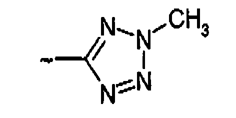

- R¹⁴: H, Halogen (F, C, Br, I), (C₁-C₆)Alkyl, (C₁-C₆)Halo-Alkyl,
- R¹⁵: H, (C₁-C₆)Alkyl, (C₁-C₆)Halo-Alkyl,
- R¹⁶: (C₁-C₆)Alkyl, (C₁-C₆)Alkoxy, (C₂-C₆)Alkenyloxy, (C₂-C₆)Alkinyloxy, (C₁-C₆)Alkytsulfonyl, (C₁-C₆)Alkylcarbonyl, (C₁-C₆)Alkoxycarbonyl, (C₂-C₆)Alkenyloxycarbonyl, (C₂-G₆)Alkinyloxycarbonyl, (C₁-C₆)Halo-Alkyl, (C₁-C₆)Halo-Alkoxy, (C₂-C₆)Halo-Alkenyloxy, (C₂₋C₆)Halo-Alkinyloxy, (C₁-C₆)Halo-Alkylsulfonyl, (C₁-C₆)Halo-Alkylcarbonyl, (C₁-C₆)Halo-Alkoxycarbonyl, (C₂-C₆)Halo-Alkenyloxycarbonyl, (C₂-C₆)Halo-Alkinyloxycarbonyl, CONR'R", insbesondere SO₂Ethyl, und
- R' und R'': unabhängig voneinander H, (C₁-C₆)Alkyl, (C₁-C₆)Haloalkyl, (C₂-C₆)Alkenyl, (C₂-C₆)Haloalkenyl, (C₂-C₆)Alkinyl, (C₂-C₆)Haloalkinyl sind, oder NR'R" bildet einen heterocylischen Ring der gesättigt, ungesättigt oder aromatisch sein kann und vorzugsweise 4-6-Ringatome und eines oder mehrere Heteroatome aus der Gruppe N, O, S enthält, und optional durch einen oder mehrere Substituenten, vorzugsweise aus der Gruppe (C₁-C₃)Alkyl, (C₁-C₃)Alkoxy, (C₁-C₃)Halo-Alkyl, (C₁-C₃)Halo-Alkoxy oder Halogen substituiert sein kann.

Besonders bevorzugte Heteroarylsulfonylharnstoffe sind z.B. Nicosulfuron (A10.1) und dessen Salze wie das Natriumsalz (A10.2), Rimsulfuron (A11.1) und dessen Salze wie das Natriumsalz (A11.2), Thifensulfuron-Methyl (A12.1) und dessen Salze wie das Natriumsalz (A12.2), Pyrazosulfuron-Ethyl (A13.1) und dessen Salze wie das Natriumsalz (A13.2), Flupyrsulfuron-Methyl (A14.1) und dessen Salze wie das Natriumsalz (A14.2), Sulfosulfuron (A15.1) und dessen Salze wie das Natriumsalz (A16.2), Trifloxysulfuron (A16.1) und dessen Salze wie das Natriumsalz (A16.2), Azimsulfuron (A17.1) und dessen Salze wie das Natriumsalz (A17.2), Flazasulfuron (A18.1) und dessen Salze wie das Natriumsalz (A18.2) und Flucetosulfuron (1-[3-[[[[(4,6-dimethoxy-2-pyrimidinyl)amino]carbonyl]amino]sulfonyl]-2-pyridinyl]-2-fluoropropyl methoxyacetat, (A19.1)) und dessen Salze wie das Natriumsalz (A 19.2).

Besonders bevorzugte Heteroarylsulfonylaminocarbonyltriazolinone sind Thiencarbazone-methyl (A20.1) und dessen Salze wie das Natriumsalz (A20.2).

Weitere geeignete ALS-Inhibitoren sind z.B.

Imidazolinone, z.B.
2-(4-Isopropyl-4-methyl-5-oxo-2-imidazolin-2-yl)-5-methylbenzoesäure-methylester und 2-(4-Isopropyl-4-methyl-5-oxo-2-imidazolin-2-yl)-4-methylbenzoesäure (Imazamethabenz),
5-Ethyl-2-(4-isopropyl-4-methyl-5-oxo-2-imidazolin-2-yl)-pyridin-3-carbonsäure (Imazethapyr),
2-(4-Isopropyl4-methyl-5-oxo-2-imidazolin-2-yl)-chinolin-3-carbonsäure (Imazaquin),
2-(4-Isopropyl-4-methyl-5-oxo-2-imidazolin-2-yl)-pyridin-3-carbonsäure (Imazapyr),
5-Methyl-2-(4-isopropyl-4-methyl-5-oxo-2-imidazolin-2-yl)-pyridin-3-carbonsäure (Imazethamethapyr);

Triazolopyrimidinsulfonamide, z.B.
N-(2,6-Dichlor-3-methylphenyl)-5,7-dimethoxy-1,2,4-triazolo[1,5-c]pyrimidin-2-sulfonamid,
N-(2,6-Difluorphenyl)-7-fluor-5-methoxy-1,2,4-triazolo[1,5-c]pyrimidin-2-sulfonamid, N-(2,6-Dichlor-3-methylphenyl)-7-chtor-5-methoxy-1,2,4-triazolo[1,5-c]pyrimidin-2-sulfonamid,
N-(2-Chlor-6-methoxycarbonyl)-5,7-dimethyl-1,2,4-triazolo[1,5-c]pyrimidin-2-sulfonamid (EP-A 0 343 752, US-A 4,988,812),
N-(2,6-Difluorphenyl)-7-methyl-1,2,4-thazolo[1,5-c]pyrimidin-2-sulfonamid, 2',6'-difluor-5-methyl[1,2,4]triazolo[1,5-a]pyrimidin-2-sulfonanilid (Flumetsulam, CAS-Nummer 98967-40-9) (A21),
N-(5,7-dimethoxy[1,2,4]triazolo[1,5-a]pyrimidin-2-yl)-2-methoxy-4-(trifluoromethyl)3-pyridinsuffonamid (Pyroxulam, CAS-Nummer 422556-08-9)(A22), 2-(2,2-difluoroethoxy)-N-(5,8-dimethoxy[1.2,4]triazolo-[1,5-c]pyrimidin-2-yl)-6-(trifluoromethyl)benzolsulfonamid (Penoxsulam, CAS-Nummer 219714-96-2) (A23). 2',6',8-trifluoro-5-methoxy[1,2,4]triazolo[1,5-c]pydmidin-2-suffonanilid (Florasulam, CAS-Nummer 145701-23-1) (A24),
2',6'-dichloro-5,7-dimethoxy-3'-methyl[1,2,4]triazolo[1,5-α]pyrimidin-2-sulfonanilid (Metosulam, CAS-Nummer 139528-85-1) (A25),
N-2,6-dichlorophenyl)-5-ethoxy-7-fluor[1,2,4]triazolo[1,5-c]pyrimidin-2-sulfonamid (Diclosulam, CAS-Nummer 145701-21-9) (A26),
3-chloro-2-(5-ethoxy-7-fluor[1,2,4]triazolo[1,5-c]pyrimidin-2-ylsulfonamido)benzoesäuremethylester, (Cloransulam-methyl, CAS-Nummer 147150-35-4) (A27);

Pyrimidinyloxy-pyridincarbonsäure- bzw. Pyrimidinyloxybenzoesäure-Derivate, z.B. 3-(4,6-Dimethoxypyrimidin-2-yl)-oxy-pyridin-2-carbonsäurebenzyl-ester (EP-A 0 249 707),
3-(4,6-Dimethoxypyrimidin-2-yl)-oxy-pyridin-2-carbonsäuremethylester (EP-A 0 249 707),
2,6-Bis[(4,6-dimethoxypyrimidin-2-yl)-oxy)-benzoesäure (EP-A 0 321 846), 2,6-Bis[(4,6-dimethoxypynmidin-2yl)-oxy]-benzoesäure-1-(ethoxycarbonyl-oxyethyl)-ester (EP-A 0 472 113).

Ganz besonders bevorzugte ALS-Inhibitoren A) sind Sulfonamide, z.B. Iodosulfuronmethyl (A1.1), lodosulfuron-methyl-Natrium (A1.2), Mesosulfuron-methyl (A2.1), Mesosulfurom-methyl-Natrium (A2.2), Flucarbazone (A4.1), Flucarbazone-Natrium (A4.2), Propoxycarbazone (A5.1) und Propoxycarbazone-Natrium (A5.2).

Die vorstehend aufgeführten Wirkstoffe sind z.B. bekannt aus "The Pesticide Manual", 14. Auflage (2006), The British Crop Protection Council oder den nach den einzelnen Wirkstoffen aufgeführten Literaturstellen.

Unter den in den erfindungsgemäßen Kombinationen als enthaltenen ALS-Inhibitoren A) werden im Sinne der vorliegenden Erfindung sind stets sämtliche Anwendungsformen wie Säuren, Ester, Salze und Isomere wie Stereoisomere und optische Isomere verstanden. So sind neben den neutralen Verbindungen stets auch deren Salze mit anorganischen und/oder organischen Gegenionen zu verstehen. So können Sulfonamide z.B. Salze bilden, bei denen der Wasserstoff der -SO₂NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B, Amino und Alkylamino, erfolgen. Geeignete Säuren hierfür sind starke anorganische und organische Säuren, beispielsweise HCI, HBr, H₂SO₄ oder HNO₃. Bevorzugte Ester sind die Alkylester, insbesondere die C₁-C₁₀-Alkylester wie Methylester.

Soweit in dieser Beschreibung der Begriff Acylrest verwendet wird, bedeutet dieser den Rest einer organischen Säure, der formal durch Abspaltung einer OH-Gruppe aus der organischen Säure entsteht, z.B. der Rest einer Carbonsäure und Reste davon abgeleiteter Säuren wie der Thiocarbonsäure, gegebenenfalls N-substituierten Iminocarbonsäuren oder die Reste von Kohlensäuremonoestem, gegebenenfalls N-substituierter Carbaminsäuren, Sulfonsäuren, Sulfinsäuren, Phosphonsäuren, Phosphinsäuren.

Ein Acylrest ist bevorzugt Formyl oder Acyl aus der Gruppe CO-R^{z}, CS-R^{z}, CO-OR^{z}, CS-OR^{z}, CS-SR^{z}, SOR^{z} oder SC₂R^{z}, wobei R^{z} jeweils einen C₁-C₁₀-Kohlenwasserstoffrest wie C₁-C₁₀-Alkyl oder C₆-C₁₀-Aryl bedeutet, der unsubstituiert oder substituiert ist, z.B. durch einen oder mehrere Substituenten aus der Gruppe Halogen wie F, Cl, Br, I, Alkoxy, Haloalkoxy, Hydroxy, Amino, Nitro, Cyano oder Alkylthio, oder R^{z} bedeutet Aminocarbonyl oder Aminosulfonyl, wobei die beiden letztgenannten Reste unsubstituiert, N-monosubstituiert oder N,N-disubstituiert sind, z.B. durch Substituenten aus der Gruppe Alkyl oder Aryl. Acyl bedeutet beispielsweise Formyl, Halogenalkylcarbonyl, Alkylcarbonyl wie (C₁-C₄)Alkylcarbonyl, Phenylcarbonyl, wobei der Phenylring substituiert sein kann, oder Alkyloxycarbonyl, wie (C₁-C₄) Alkyloxycarbonyl, Phenyloxycarbonyl, Benzyloxycarbonyl, Alkylsulfonyl, wie (C₁-C₄) Alkylsulfonyl, Alkylsulfinyl, wie C₁-C₄(Alkylsulfinyl), N-Alkyl-1-iminoalkyl, wie N-(C₁-C₄)-1-imino-(C₁-C₄)alkyl und andere Reste von organischen Säuren.

Ein Kohlenwasserstoffrest bedeutet ein geradkettiger, verzweigter oder cyclischer und gesättigter oder ungesättigter aliphatischer oder aromatischer Kohlenwasserstoffrest, z.B. Alkyl, Alkenyl, Alkinyl, Cycloalkyl, Cycloalkenyl oder Aryl. Ein Kohlenwasserstoffrest weist bevorzugt 1 bis 40 C-Atome, vorzugsweise 1 bis 30 C-Atome auf; besonders bevorzugt bedeutet ein Kohlenwasserstoffrest Alkyl, Alkenyl oder Alkinyl mit bis zu 12 C-Atomen oder Cycloalkyl mit 3, 4, 5, 6 oder 7 Ringatomen oder Phenyl.

Aryl bedeutet ein mono-, bi- oder polycyclisches aromatisches System, beispielsweise Phenyl, Naphthyl, Tetrahydronaphthyl, Indenyl, Indanyl, Pentalenyl, Fluorenyl und ähnliches, vorzugsweise Phenyl.

Ein heterocyclischer Rest oder Ring (Heterocyclyl) kann gesättigt, ungesättigt oder heteroaromatisch und unsubstituiert oder substituiert sein; er enthält vorzugsweise ein oder mehrere Heteroatome im Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen und enthält 1, 2 oder 3 Heteroatome. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält, beispielsweise Pyridyl, Pyrimidinyl, Pyridazinyl, Pyrazinyl, Triazinyl, Thienyl, Thiazolyl, Oxazolyl, Furyl, Pyrrolyl, Pyrazolyl und Imidazolyl, oder ist ein partiell oder vollständig hydrierter Rest wie Oxiranyl, Oxetanyl, Pyrrolidyl, Piperidyl, Piperazinyl, Triazolyl, Dioxolanyl, Morpholinyl, Tetrahydrofuryl. Bevorzugt sind Pyrimidinyl und Triazinyl. Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten. Substituierte Reste, wie substituierte Kohlenwasserstoffreste, z.B. substituiertes Alkyl, Alkenyl, Alkinyl, Aryl, Phenyl und Benzyl, oder substituiertes Heterocyclyl oder Heteroaryl, bedeuten beispielsweise einen vom unsubstituierten Grundkörper abgeleiteten substituierten Rest, wobei die Substituenten beispielsweise einen oder mehrere, vorzugsweise 1, 2 oder 3 Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino, wie Acylamino, Mono- und Dialkylamino, und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, wie Alkenyl, Alkinyl, Alkenyloxy, Alkinyloxy etc. bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)Haloalkyl, vorzugsweise Trifluormethyl, (C₁-C₄)Alkoxy, vorzugsweise Methoxy oder Ethoxy, (C₁-C₄)Haloalkoxy, Nitro und Cyano. Besonders bevorzugt sind dabei die Substituenten Methyl, Methoxy und Chlor.

Gegebenenfalls substituiertes Phenyl ist vorzugsweise Phenyl, das unsubstituiert oder ein- oder mehrfach, vorzugsweise bis zu dreifach durch gleiche oder verschiedene Reste, vorzugsweise aus der Gruppe Halogen, (C₁-C₄)Alkyl, (C₁-C₄)Alkoxy, (C₁-C₄)Halogenalkyl, (C₁-C₄)Halogenalkoxy und Nitro substituiert ist, z.B. o-, m- und p-Tolyl, Dimethylphenyl, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Cycloalkyl bedeutet ein carbocyclisches, gesättigtes Ringsystem vorzugsweise mit 3-6 C-Atomen, z.B. Cyclopropyl, Cyclobutyl, Cyclopentyl oder Cyclohexyl,

Die kohlenstoffhaltigen Reste wie Alkyl, Alkoxy, Haloalkyl, Haloalkoxy, Alkylamino und Alkylthio sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen bzw. bei ungesättigten Gruppen mit 2 bis 6 C-Atomen, bevorzugt. Alkylreste, auch in den zusammengesetzten Bedeutungen wie Alkoxy, Haloalkyl usw., bedeuten z.B. Methyl, Ethyl, n- oder 1-Propyl, n-, i-, t- oder 2-Butyl, Pentyle, Hexyle, wie n-Hexyl, i-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Propargyl, But-2-in-1-yl, But-3-in-1-yl, 1-Methyl-but-3-in-1-yl.

Halogen bedeutet beispielsweise Fluor, Chlor, Brom oder Iod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl bzw. Alkinyl, z.B. CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl, entsprechendes gilt für Haloalkenyl und andere durch Halogen substituierte Reste.

Als Komponente B) geeignet sind agrochemische Wirkstoffe, vorzugsweise fungizide Wirkstoffe, aus der Gruppe der Triazole, Pyrazole oder Triazolinthione, vorzugsweise aus der Gruppe der Triazole, z.B. die nachfolgend genannten Wirkstoffe (dabei ist in Klammern hinter den Verbindungen jeweils die CAS-Nummer zumindest einer bevorzugten Form angegeben, insbesondere einer handelsüblichen Form):
B1: Azaconazole (60207-31-0), B2: Bromuconazole (116255-48-2),
B3: Cyproconazole (113096-99-4), B4: Diclobutrazole (75736-33-3),
B5: Difenoconazole (119446-68-3), B6: Diniconazole (83657-24-3),
B7: Diniconazole-M (83657-18-5), B8: Epoxiconazole (106325-08-0),
B9: Etaconazole (60207-93-4), B10: Fenbuconazole (114389-43-6),
B11: Fluquinconazole (136426-54-5), B12: Flusilazole (85509-19-9),
B13: Furconazole (112839-33-5), B14: Hexaconazole (79983-71-4),
B15: Imibenconazole (86598-92-7), B16: Ipconazole (125225-28-7),
B17: Metconazole (125116-23-6), B18: Paclobutrazol (76738-62-0),
B19: Penconazole (66246-88-6), B20: Propiconazole (60207-90-1),
B21: Prothioconazole (178928-70-6), B22: Quinconazole (13970-75-8),
B23: Simeconazole (149508-90-7), B24: Tebuconazole (107534-96-3),
B25: Tetraconazole (112281-77-3), B26: Triticonazole (131983-72-7),
B27: Uniconazole (83657-22-1), B28: Viniconazole (77174-66-4),
B29, Voriconazole (137234-62-9), B30: (1-(4-Chlorphenyl)-2-(1H-1,2,4-triazol-1-yl)cycloheptanol (129586-32-9), B31: Triadimenol (55219-65-3; 89482-17-7; 82200-72-4), B32: Triadimefon (43121-43-3), B33: Bitertanol (70585-36-3; 70585-38-5; 55179-31-2), B34: Flutriafol (76674-21-0), B35: Myclobutanil (88671-89-0).

Besonders bevorzugte Azole B) sind Cyproconazole (B3), Epoxiconazole (B8), Fluquinconazole (B11), Propiconazole (B20), Prothioconazole (B21), Tebuconazol (B24) und Myclobutanil (B35).

Die erfindungsgemäßen Herbizid-Azol-Kombinationen weisen im allgemeinen einen wirksamen Gehalt an Komponenten A) und B) auf und können zusätzlich weitere Komponenten enthalten, z. B. agrochemische Wirkstoffe anderer Art und/oder im Pflanzenschutz übliche Zusatzstoffe und/oder Formulierungshilfsmittel, oder zusammen mit diesen eingesetzt werden.

Die erfindungsgemäßen Herbizid-Azol-Kombinationen weisen in bevorzugter Ausführungsform einen synergistisch wirksamen Gehalt an Komponenten A) und B) auf. Die synergistischen Wirkungen, insbesondere synergistische herbizide Wirkungen, können z.B. bei gemeinsamer Ausbringung der Wirkstoffe A) und B) beobachtet werden, sie können jedoch häufig auch bei zeitlich versetzter Anwendung (Splittanwendung) festgestellt werden. Möglich ist auch die Anwendung der einzelnen Wirkstoffe oder der Herbizid-Azol-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf, Bevorzugt ist dabei die gemeinsame oder die zeitnahe Anwendung der Wirkstoffe der erfindungsgemäßen Herbizid-Azol-Kombination.

Die synergistischen Effekte erlauben eine Reduktion der Aufwandmengen der Einzelwirkstoffe, eine höhere Wirkungsstärke bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die genannten Formeln (I) - (VI) umfassen alle Stereoisomeren und deren Gemische, insbesondere auch racemische Gemische, und - soweit Enantiomere möglich sind - das jeweils biologisch wirksame Enantiomere. Die Verbindungen der Formeln (I) - (VI) können Salze bilden, z.B. solche bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

Die herbiziden Wirkstoffe A) können das Enzym Acetolactatsynthase (ALS) und damit die Proteinsynthese in Pflanzen hemmen. Die Aufwandmenge der Wirkstoffe A) kann in weiten Bereichen variieren, beispielsweise zwischen 0,001 und 0,5 kg AS/ha (AS/ha bedeutet "Aktivsubstanz pro Hektar" = bezogen auf 100%igen Wirkstoff). Bei Anwendungen mit Aufwandmengen von 0,01 bis 0,2 kg AS/ha der Wirkstoffe A), vorzugsweise der Wirkstoffe A1.1, A1.2, A2.1, A2.2, A4.1, A4.2, A5.1 und A5.2, wird im Vor und Nachauflaufverfahren ein relativ breites Spektrum an annuellen und perennierenden Unkräutern, Ungräsem sowie Cyperaceen bekämpft. Bei den erfindungsgemäßen Kombinationen liegen die Aufwandmengen in der Regel niedriger, z.B. im Bereich von 0,5 bis 120 g AS/ha, vorzugsweise 1 bis 50 g AS/ha.

Die Aufwandmenge der agrochemischen Wirkstoffe B) kann in weiten Bereichen variieren, beispielsweise zwischen 0,001 und 0,5 kg AS/ha. Bevorzugt liegt die Aufwandmenge der Wirkstoffe B), vorzugsweise der Wirkstoffe B3, B8, B11, B20, B21, B24 und B35, im Bereich von 0,01 bis 0,25 kg AS/ha.

In den erfindungsgemäßen Herbizid-Azol-Kombinationen sind die Komponenten A) und B) bevorzugt in eine synergistisch wirksamen Menge enthalten. Das Aufwandmengenverhältnis der Komponenten A): B) kann in weiten Bereichen variieren, beispielsweise von 1 : 50 bis 5 : 1, vorzugsweise von 1 : 25 bis 2,5 :1, besonders bevorzugt von 1 : 15 bis 2 : 1.

Die Wirkstoffe können in der Regel als wasserlösliches Spritzpulver (WP), wasserdispergierbares Granulat (WDG), wasseremulgierbares Granulat (WEG), Suspoemulsion (SE), Öldispersion (OD), Suspensionskonzentrat (SC oder FS), emulgierbares Konzentrat (EC), wässrige Lösungen (SL), Emulsionen (EW) formuliert werden.

Die im allgemeinen verwendeten Aufwandmengenverhältnisse A) : B) sind vorstehend angegeben und bezeichnen das Gewichtsverhältnis der beiden Komponenten A) und B) zueinander.

Bei Anwendung der Wirkstoffe A) in Pflanzenkulturen kann es je nach Pflanzenkultur zweckmäßig sein, ab bestimmter Aufwandmengen einen Safener zu applizieren, um eventuelle Schäden an der Kulturpflanze zu reduzieren oder zu vermeiden. Beispiele für geeignete Safener sind solche, die in Kombination mit ALS-Inhibitoren, z.B. Sulfonamid-Herbiziden wie Sulfonylharnstoffen, Safenerwirkung entfalten. Geeignete Safener sind z.B. aus WO-A-96/14747 und der dort zitierten Literatur bekannt.

Folgende Gruppen von Verbindungen sind beispielsweise als Safener geeignet:

S1) Verbindungen der Formel (S1), 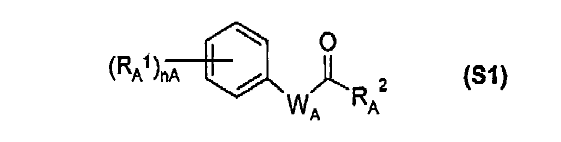 wobei die Symbole und Indizes folgende Bedeutungen haben:
- n_{A}: ist eine natürliche Zahl von 0 bis 5, vorzugsweise 0 bis 3;
- R_{A}¹: ist Halogen, (C₁-C₄)Alkyl, (C₁-C₄)Alkoxy, Nitro oder (C₁-C₄)Haloalkyl;
- W_{A}: ist ein unsubstituierter oder substituierter divalenter heterocyclischer Rest aus der Gruppe der teilungesättigten oder aromatischen Fünfring-Heterocyclen mit 1 bis 3 Heteroringatomen aus der Gruppe N und O, wobei mindestens ein N-Atom und höchstens ein O-Atom im Ring enthalten ist, vorzugsweise ein Rest aus der Gruppe (W_{A}¹) bis (W_{A}⁴),

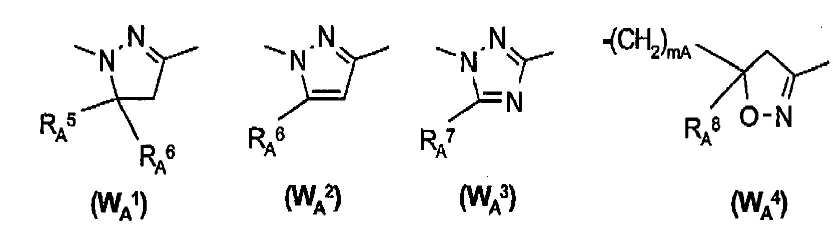

- m_{A}: ist 0 oder 1;
- R_{A}²: ist OR_{A}³, SR_{A}³ oder NF_{A}³R_{A}⁴ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S1) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR_{A}³. NHR_{A}⁴ oder N(CH₃)₂, insbesondere der Formel OR_{A}³;
- R_{A}³: ist Wasserstoff oder ein unsubstituierter oder substituierter aliphatischer Kohlenwasserstoffrest, vorzugsweise mit insgesamt 1 bis 18 C-Atomen;
- R_{A}⁴: ist Wasserstoff, (C₁-C₆)Alkyl, (C₁-C₆)Alkoxy oder substituiertes oder unsubstituiertes Phenyl;
- R_{A}⁵: ist H, (C₁-C₈)Alkyl, (C₁-C₈)Haloalkyl, (C₁-C₄)Alkoxy(C₁-C₈)Alkyl, Cyano oder COOR_{A}⁹, worin R_{A}⁹ Wasserstoff, (C₁-C₈)Alkyl, (C₁-C₈)Haloalkyl, (C₁-C₄)Alkoxy-(C₁-C₄)alkyl, (C₁-C₆)Hydroxyalkyl, (C₃-C₁₂)Cycloalkyl oder Tri-(C₁-C₄)-alkyl-silyl ist;
- R_{A}⁶, R_{A}⁷, R_{A}⁸: sind gleich oder verschieden Wasserstoff, (C₁-C₈)Alkyl, (C₁-C₈)Haloalkyl, (C₃-C₁₂)Cycloalkyl oder substituiertes oder unsubstituiertes Phenyl;
vorzugsweise:
a) Verbindungen vom Typ der Dichlorphenylpyrazolin-3-carbonsäure (S1^{a}), vorzugsweise Verbindungen wie 1-(2,4-Dichlorphenyl)-5-(ethoxyrcarbonyl)-5-methyl-2-pyrazolin-3-carbonsäure, 1-(2,4-Dichlorphenyl)-5-(ethoxycarbonyl)-5-methyl-2-pyrazolin-3-carbonsäureethylester(S1-1) ("Mefenpyr-diethyl"), und verwandte Verbindungen, wie sie in der WO-A-91/07874 beschrieben sind;
b) Derivate der Dichlorphenylpyrazolcarbonsäure (S1^{b}), vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4) und verwandte Verbindungen, wie sie in EP-A-333 131 und EP-A-269 806 beschrieben sind;
c) Derivate der 1,5-Diphenylpyrazol-3-carbonsäure (S1^{c}), vorzugsweise Verbindungen wie 1-(2,4-Dichlorphenyl)-5-phenylpyrazol-3-carbonsäureethylester (S1-5), 1-(2-Chlorphenyl)-5-phenylpyrazol-3-carbonsäuremethylester (S1-6) und verwandte Verbindungen wie sie beispielsweise in der EP-A-268554 beschrieben sind;
d) Verbindungen vom Typ der Triazolcarbonsäuren (S1^{d}), vorzugsweise Verbindungen wie Fenchlorazol(-ethylester), d.h. 1-(2,4-Dichlorphenyl)-5-trichlormethyl-(1H)-1,2,4-tdazol-3-carbonsäureethylester (S1-7), und verwandte Verbindungen wie sie in EP-A-174 562 und EP-A-346 620 beschrieben sind;
e) Verbindungen vom Typ der 5-Benzyl- oder 5-Phenyl-2-isoxazolin-3- carbonsäure oder der 5,5-Diphenyl-2-isoxazolin-3-carbonsäure (S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolin-carbonsäure (S1-10) oder 5,5-Diphenyl-2-isoxazolin-carbonsäureethylester (S1-11) ("Isoxadifen-ethyl") oder
-n-propylester (S1-12) oder der 5-(4-Fluorphenyl)-5-phenyl-2-isoxazolin-3-carbonsäureethylester (S1-13), wie sie in der Patentanmeldung WO-A-95/07897 beschrieben sind.

S2) Chinolinderivate der Formel (S2), 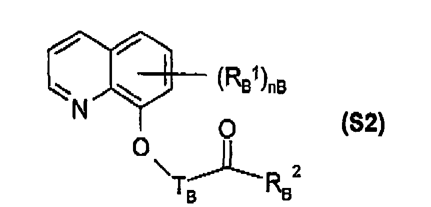 wobei die Symbole und Indizes folgende Bedeutungen haben:
- R_{B}¹: ist Halogen, (C₁-C₄)Alkyl, (C₁-C₄)Alkoxy, Nitro oder (C₁-C₄)Haloalkyl;
- n_{B}: ist eine natürliche Zahl von 0 bis 5, vorzugsweise 0 bis 3;
- R_{B}²: ist OR_{B}³, SR_{B}³ oder NR_{B}³R_{B}⁴ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S2) verbunden ist und unsubstituiert oder durch Reste aus der Gruppe (C₁-C₄)Alkyl, (C₁-C₄)Alkoxy oder gegebenenfalls substituiertes Phenyl substituiert ist, vorzugsweise ein Rest der Formel OR_{B}³, NHR_{B}⁴ oder N(CH₃)₂, insbesondere der Formel OR_{B}³;
- R_{B}³: ist Wasserstoff oder ein unsubstituierter oder substituierter aliphatischer Kohlenwasserstoffrest, vorzugsweise mit insgesamt 1 bis 18 C-Atomen;
- R_{B}⁴: ist Wasserstoff, (C₁-C₆)Alkyl, (C₁-C₆)Alkoxy oder substituiertes oder unsubstituiertes Phenyl;
- T_{B}: ist eine (C₁ oder C₂)-Alkandiylkette, die unsubstituiert oder mit einem oder zwei (C₁-C₄)Alkylresten oder mit [(C₁-C₃)-Alkoxy]-carbonyl substituiert ist;
vorzugsweise:
a) Verbindungen vom Typ der 8-Chinolinoxyessigsäure (S2^{a}), vorzugsweise (5-Chlor-8-chinolinoxy)essigsäure-(1-methylhexyl)ester ("Cloquintocet-mexyl") (S2-1),
   (5-Chlor-8-chinolinoxy)essigsäure-(1,3-dimethyl-but-1-yl)ester(S2-2), (5-Chlor-8-chinolinoxy)essigsäure-4-allyloxy-butylester (S2-3), (5-Chlor-8-chinolinoxy)essigsäure-1-allyloxy-prop-2-ylester (S2-4), (5-Chlor-8-chinolinoxy)essigsäureethylester (S2-5), (5-Chlor-8-chinolinoxy)essigsäuremethylester (S2-6), (5-Chlor-8-chinolinoxy)essigsäureallylester (S2-7), (5-Chlor-B-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750. EP-A-94 349 und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
b) Verbindungen vom Typ der (5-Chlor-8-chinolinoxy)malonsäure (S2^{b}), vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.

S3) Verbindungen der Formel (S3) 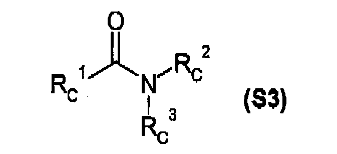 wobei die Symbole und Indizes folgende Bedeutungen haben:
- R_{C}¹: ist (C₁-C₄)Alkyl, (C₁-C₄)Haloalkyl, (C₂-C₄)Alkenyl, (C₂-C₄)Haloalkenyl, (C₃-C₇)Cycloalkyl, vorzugsweise Dichlormethyl;
- R_{C}², R_{C}³: sind gleich oder verschieden Wasserstoff, (C₁-C₄)Alkyl, (C₂-C₄)Alkenyl, (C₂-C₄)Alkinyl, (C₁-C₄)Haloalkyl, (C₂-C₄)Haloalkenyl, (C₁-C₄)Alkylcarbamoyl-(C₁-C₄)alkyl, (C₂-C₄)Alkenylcarbamoyl-(C₁-C₄)alkyl, (C₁-C₄)Alkoxy-(C₁-C₄)alkyl, Dioxolanyl-(C₁-C₄)alkyl, Thiazolyl, Furyl, Furylalkyl, Thienyl, Piperidyl, substituiertes oder unsubstituiertes Phenyl, oder R_{C}² und R_{C}³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring;
vorzugsweise:
Wirkstoffe vom Typ der Dichloracetamide, die häufig als Vorauflaufsafener (bodenwirksame Safener) angewendet werden, wie z. B.
"Dichlormid" (N,N-Diallyl-2,2-dichloracetamid) (S3-1),
"R-29148" (3-Dichloracetyl-2,2,5-trimethyl-1,3-oxazolidin) der Firma Stauffer (S3-2).
"R-28725" (3-Dichloracetyl-2,2,-dimethyl-1,3-oxazolidin) der Firma Stauffer (S3-3),
"Benoxacor" (4-Dichloracetyl-3,4-dihydro-3-methyl-2H-1,4-benzoxazin) (S3-4), "PPG-1292" (N-Allyl-N-[(1,3-dioxolan-2-yl)-methyl-dichloracetamid) der Firma PPG Industries (S3-5),
"DKA-24" (N-Allyl-N-[(allylaminocarbonyl)methyl]-dichloracetamid) der Firma Sagro-Chem (S3-6),
"AD-67" oder "MON 4660" (3-Dichloracetyl-1-oxa-3-aza-spiro[4,5]decan) der Firma Nitrokemia bzw. Monsanto (S3-7),
"TI-35" (1-Dichloracetyl-azepan) der Firma TRI-Chemical RT (S3-8),
"Diclonon" (Dicyclonon) oder "BAS145138" oder "LAB145138" (S3-9) (3-Dichloracetyl-2,5,5-trimethyl-1,3-diazabicyclo[4.3.0]nonan) der Firma BASF,
"Furilazol" oder "MON 13900" ((RS)-3-Dichloracety)-5-(2-furyl)-2,2-dimethyloxazolidin) (S3-10); sowie dessen (R)-Isomer (S3-11).

S4) N-Acylsulfonamide der Formel (S4) und ihre Salze, 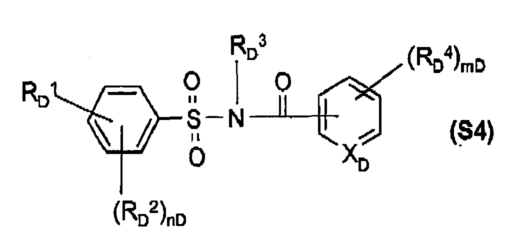 worin die Symbole und Indizes folgende Bedeutungen haben:
- X_{D}: ist CH oder N;
- R_{D}¹: ist CO-NR_{D}⁵R_{D}⁶ oder NHCO-R_{D}⁷;
- R_{D}²: ist Halogen, (C₁-C₄)Haloalkyl, (C₁-C₄)Haloalkoxy, Nitro, (C₁-C₄)Alkyl, (C₁-C₄)Alkoxy, (C₁-C₄)Alkylsulfonyl, (C₁-C₄)Alkoxycarbonyl oder (C₁-C₄)Alkylcarbonyl;
- R_{D}³: ist Wasserstoff, (C₁-C₄)Alkyl, (C₂-C₄)Alkenyl oder (C₂-C₄)Alkinyl;
- R_{D}⁴: ist Halogen, Nitro, (C₁-C₄)Alkyl, (C₁-C₄)Haloalkyl, (C₁-C₄)Haloalkoxy, (C₃-C₆)Cycloalkyl, Phenyl, (C₁-C₄)Alkoxy, Cyano, (C₁-C₄)Alkylthio, (C₁-C₄)Alkylsulfinyl, (C₁-C₄)Alkylsulfonyl, (C₁-C₄)Alkoxycarbonyl oder (C₁-C₄)Alkylcarbonyl;
- R_{D}⁵: ist Wasserstoff, (C₁-C₆)Alkyl, (C₃-C₆)dycloalkyl, (C₂-C₆)Alkenyl, (C₂-C₆)Alkinyl, (C₅-C₆)Cycloalkenyl, Phenyl oder 3- bis 6-gliedriges Heterocyclyl enthaltend v_{D} Heteroatome aus der Gruppe Stickstoff, Sauerstoff und Schwefel, wobei die sieben letztgenannten Reste durch v_{D} Substituenten aus der Gruppe Halogen, (C₁-C₆)Alkoxy, (C₁-C₆)Haloalkoxy, (C₁-C₂)Alkylsulfinyl, (C₁C₂)Alkylsulfonyl, (C₃-C₆)Cycloalkyl, (C₁-C₄)Alkoxycarbonyl, (C₁C₄)Alkylcarbonyl und Phenyl und im Falle cyclischer Reste auch (C₁-C₄) Alkyl und (C₁-C₄)Haloalkyl substituiert sind;
- R_{D}⁶: ist Wasserstoff, (C₁-C₆)Alkyl, (C₂-C₆)Alkenyl oder (C₂-C₆)Alkinyl, wobei die drei letztgenannten Reste durch v_{D} Reste aus der Gruppe Halogen, Hydroxy, (C₁-C₄)Alkyl, (C₁-C₄)Alkoxy und (C₁-C₄)Alkgthio substituiert sind, oder
- R_{D}⁵ und R_{D}⁶: gemeinsam mit dem dem sie tragenden Stickstoffatom einen Pyrrolidinyl- oder Piperidinyl-Rest bilden;
- R_{D}⁷: ist Wasserstoff, (C₁-C₄)Alkylamino, Di-(C₁-C₄)alkylamino, (C₁-C₆)Akyl, (C₃-C₆)Cycloalkyl, wobei die 2 letztgenannten Reste durch v_{D} Substituenten aus der Gruppe Halogen, (C₁-C₄)Alkoxy, (C₁-C₆)Haloalkoxy und (C₁-C₄)Alkylthio und im Falle cyclischer Reste auch (C₁-C₄)Alkyl und (C₁-C₄)Haloalkyl substituiert sind;
- n_{D}: ist 0, 1 oder 2;
- m_{D}: ist 1 oder 2;
- v_{D}: ist 0,1,2 oder 3;
davon bevorzugt sind Verbindungen von Typ der N-

Acylsulfonamide, z.B. der nachfolgenden Formel (S4^{a}), die z. B. bekannt sind aus WO-A-97/45096 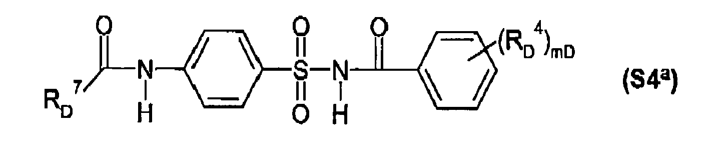 worin
- R_{D}⁷: (C₁-C₆)Alkyl, (C₃-C₆)Cycloalkyl, wobei die 2 letztgenannten Reste durch v_{D} Substituenten aus der Gruppe Halogen, (C₁-C₄)Alkoxy, (C₁-C₆)Haloalkoxy und (C₁-C₄)Alkylthio und im Falle cyclischer Reste auch (C₁-C₄)Alkyl und (C₁-C₄)Haloalkyl substituiert sind;
- R_{D}⁴: Halogen, (C₁-C₄)Alkyl, (C₁-C₄)Alkoxy, CF₃;
- m_{D}: 1 oder 2;
- v_{D}: ist 0, 1, 2 oder 3 bedeutet;
sowie
Acylsulfamoylbenzoesäureamide, z.B. der nachfolgenden
Formel (S4^{b}), die z.B. bekannt sind aus WO-A-99/16744, 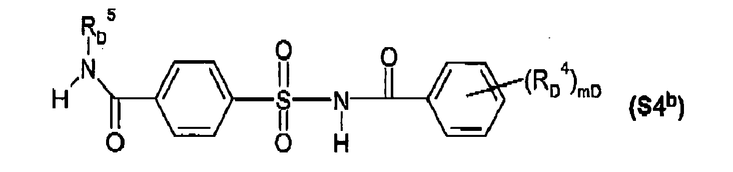 z.B. solche worin
R_{D}⁵ = Cyclopropyl und (R_{D}⁴) = 2-OMe ist ("Cyprosulfamide", S4-1).
R_{D}⁵ = Cyclopropyl und (R_{D}⁴) = 5-Cl-2-OMe ist (S4-2),
R_{D}⁵ = Ethyl und (R_{D}⁴) = 2-OMe ist(S4-3),
R_{D}⁵ Isopropyl und (R_{D}⁴) = 5-Cl-2-OMe ist (S4-4) und
R_{D}⁵ = Isopropyl und (R_{D}⁴) = 2-OMe ist (S4-5).
sowie
Verbindungen vom Typ der N-Acylsulfamoylphenylhamstoffe der Formel (S4^{c}), die z.B. bekannt sind aus der EP-A-365484, 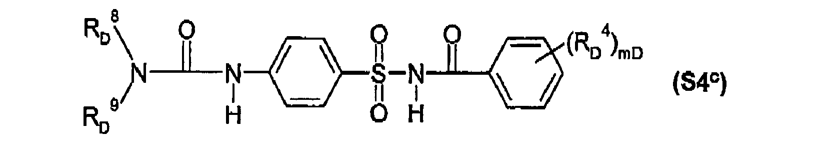 worin
- R_{D}⁸: und R_{D}⁹ unabhängig voneinander Wasserstoff, (C₁-C₈)Alkyl, (C₃-C₈)Cycloalkyl, (C₃-C₆)Alkenyl, (C₃-C₆)Alkiny),
- R_{D}⁴: Halogen, (C₁-C₄)Alkyl, (C₁-C₄)Alkoxy, CF₃
- m_{D}: 1 oder 2 bedeutet;
beispielsweise
1-[4-(N-2-Methoxybenzoylsulfamoyl)phenyl]-3-methylhamstoff,
1-[4-(N-2-Methoxybenzoylsulfamoyl)phenyl]-3,3-dimethylhamstoff,
1-[4-(N-4,5-Dimethylbenzoylsuffamoyl)phenyl]-3-methylhamsioff.

S5) Wirkstoffe aus der Klasse der Hydroxyaromaten und der aromatischaliphatischen Carbonsäurederivate (S5), z.B.
3,4,5-Triacetoxybenzoesäureethylester, 3,5-Dimethoxy-4-hydroxybenzoesäure, 3,5-Dihydroxybenzoosäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.

S6) Wirkstoffe aus der Klasse der 1,2-Dihydrochinoxalin-2-one (S6), z.B.
1-Methyl-3-(2-thienyl)-1,2-dihydrochinoxalin-2-on, 1-Methyl-3-(2-thienyl)-1,2-dlhydrochinoxalin-2-thion, 1-(2-Aminoethyl)-3-(2-thienyl)-1,2-dihydrochinoxalin-2-on-hydrochlorid, 1-(2-Methylsulfonylaminoethyl)-3-(2-thienyl)-1.2-dihydro-chinoxalin-2-on, wie sie in der WO-A-2005/112630 beschrieben sind.

S7) Verbindungen der Formel (S7),wie sie in der WO-A-1998/38856 beschrieben sind 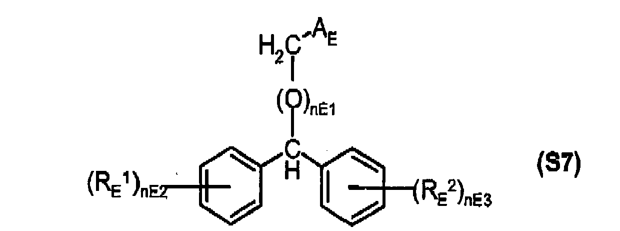 worin die Symbole und Indizes folgende Bedeutungen haben:
- R_{E}¹, R_{E}²: sind unabhängig voneinander Halogen, (C₁-C₄)Alkyl, (C₁-C₄)Alkoxy, (C₁-C₄)Haloalkyl, (C₁-C₄)Alkylamino, Di-(C₁-C₄)Alkylamino. Nitro;
- A_{E}: ist COOR_{E}³ oder COSR_{E}⁴
- R_{E}³, R_{E}⁴: sind unabhängig voneinander Wasserstoff, (C₁-C₄)Alkyl, (C₂C₆)Alkenyl, (C₂-C₄)Alkinyl, Cyanoalkyl, (C₁-C₄)Haloalkyl, Phenyl, Nitrophenyl, Benzyl, Halobenzyl, Pyridinylalkyl und Alkylammonium,
- n_{E}¹: ist 0 oder 1
- n_{E}², n_{E}³: sind unabhängig voneinander 0,1 oder 2,
vorzugsweise:
Diphenylmethoxyessigsäure,
Diphenylmethoxyessigsäureethylester,
Diphenylmethoxyessigsäuremethylester (CAS-Reg.Nr. 41858-19-9) (S7-1).

S8) Verbindungen der Formel (S8),wie sie in der WO-A-98/27049 beschrieben sind 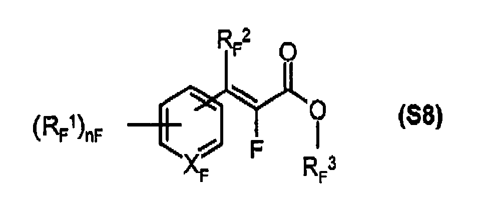 worin
- X_{F}: CH oder N,
- n_{F}: für den Fall, dass X_{F}=N ist, eine ganze Zahl von 0 bis 4 und für den Fall, dass X_{F}=C_{H} ist, eine ganze Zahl von 0 bis 5 ,
- R_{F}¹: Halogen, (C₁-C₄)Alkyl, (C₁-C₄)Haloalkyl, (C₁-C₄)Alkoxy, (C₁-C₄)Haloalkoxy, Nitro, (C₁-C₄)Alkylthlo, (C₁-C₄)-Alkylsulfonyl, (C₁-C₄)Alkoxycarbonyl, ggf. substituiertes. Phenyl, ggf, substituiertes Phenoxy,
- R_{F}²: Wasserstoff oder (C₁-C₄)Alkyl
- R_{F}³: Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist;bedeuten, oder deren Salze,
vorzugsweise Verbindungen worin
- X_{F}: CH,
- n_{F}: eine ganze Zahl von 0 bis 2 ,
- R_{F}¹: Halogen, (C₁-C₄)Alkyl, (C₁-C₄)Haloalkyl, (C₁-C₄)Alkoxy, (C₁-C₄)Haloalkoxy,
- R_{F}²: Wasserstoff oder (C₁-C₄)Alkyl,
- R_{F}³: Wasserstoff, (C₁-C₈)Alkyl, (C₁-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist, bedeuten, oder deren Salze.

S9) Wirkstoffe aus der Klasse der 3-(5-Tetrazolcarbonyl)-2-chinolone (S9), z.B. 1,2-Dihydro-4-hydroxy-1-ethyl-3-(5-tetrazolylcarbonyl)-2-chinolon (CAS-Reg.Nr. 219479-18-2). 1,2-Dihydro-4-hydroxy-1-methyl-3-(5-tetrazolylcarbonyl)-2-chinolon (CAS-Reg.Nr. 95855-00-8), wie sie in der WO-A-1999/000020 beschrieben sind.

S10) Verbindungen der Formeln (S10^{a}) oder (S10^{b}) wie sie in der WO-A-2007/023719 und WO-A-2007/023764 beschrieben sind 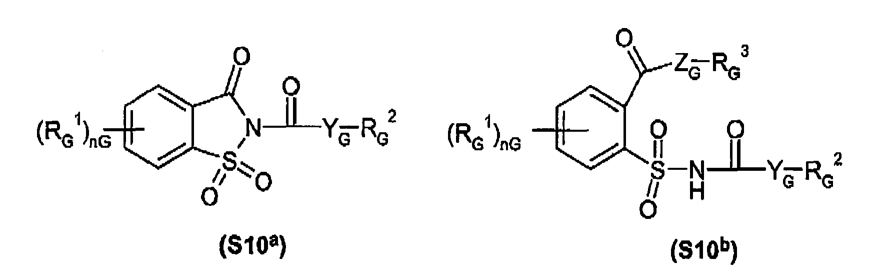 worin
- R_{G}¹: Halogen, (C₁-C₄)Alkyl, Methoxy, Nitro, Cyano, CF₃, OCF₃
- Y_{G}, Z_{G}: unabhängig voneinander O oder S,
- n_{G}: eine ganze Zahl von 0 bis 4,
- R_{G}²: (C₁-C₁₆)Alkyl, (C₂-C₆)Alkenyl, (C₃-C₆)Cycloalkyl, Aryl; Benzyl, Halogenbenzyl,
- R_{G}³: Wasserstoff oder (C₁-C₆)Alkyl bedeutet.

S11) Wirkstoffe vom Typ der Oxyimino-Verbindungen (S11), die als Saatbeizmittel bekannt sind, wie z. B.
"Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
"Fluxofenim" (1-(4-Chlorpheny))-2,2,2-trifluor-1-ethanon-O-(1,3-dioxolan-2-ylmethyl)-oxim) (S11-2), das als Saatbeiz-Safener für Hirse gegen Schäden von Metolachlor bekannt ist, und
"Cyometrinil" oder "CGA-43089" ((Z)-Cyanomethoxyimino(phenyl)acetonitril) (S11-3), das als Saatbeiz-Safener für Hirse gegen Schäden von Metolachlor bekannt ist.

S12) Wirkstoffe aus der Klasse der Isothiochromanone (S12), wie z.B. Mothyl-[(3-oxo-1 H-2-benzothiopyran-4(3H)-yliden)methoxy]acetate (CAS-Reg.Nr. 205121-04-6) (S12-1) und verwandte Verbindungen aus WO-A-1998/13361.

S13) Eine oder mehrere Verbindungen aus Gruppe (S13):
"Naphthalic anhydrid" (1,8-Naphthalindicarbonsäureanhydrid) (S13-1), das als Saatbeiz-Safener für Mais gegen Schäden von Thiocarbamatherbiziden bekannt ist,
"Fenclorim" (4,6-Dichlor-2-phenylpyrimidin) (S13-2), das als Safener für Pretilachlor in gesätem Reis bekannt ist,
"Flurazole" (Benzyl-2-chlor-4-trifluormethyl-1,3-thiazal-5-carboxylat) (S13-3), das als Saatbeiz-Safener für Hirse gegen Schäden von Alachlor und Metolachlor bekannt ist,
"CL 304415" (CAS-Reg.Nr. 31541-57-8)
(4-Carboxy-3,4-dihydro-2H-1-benzopyran-4-essigsäure) (S13-4) der Firma American Cyanamid, das als Safener für Mais gegen Schäden von Imidazolinonen bekannt ist,
"MG 191" (CAS-Reg.Nr. 96420-72-3) (2-Dichlormethyl-2-methyl-9,3-dioxolan) (S13-5) der Firma Nitrokemia, das als Safener für Mais bekannt ist, "MG-838" (CAS-Reg.Nr. 133993-74-5)
(2-propenyl 1-oxa-4-azaspiro[4.5]decane-4-carbodithioate) (S13-6) der Firma Nitrokemia,
"Disulfoton" (O,O-Diethyl S-2-ethylthloethyl phosphordithioat) (S13-7), "Dietholate" (O,O-Diethyl-O-phenylphosphorotioat) (S13-8),
"Mephenate" (4-Chlorphenyl-methylcarbamat) (S13-9).

S14) Wirkstoffe, die neben einer herbiziden Wirkung gegen Schadpflanzen auch Safenerwirkung an Kulturpflanzen wie Reis aufweisen, wie z. B. "Dimepiperate" oder "MY-93" (S-1-Methyl-1-phenylethyl-piperidin-1-carbothioat), das als Safener für Reis gegen Schäden des Herbizids Molinate bekannt ist,
"Daimuron" oder "SK 23" (1-(1-Methyl-1-phenylethyl)-3-p-tolyl-hamstoff), das als Safener für Reis gegen Schäden des Herbizids Imazosulfuron bekannt ist, "Cumyluron" = "JC-940" (3-(2-Chlorphenylmethyl)-1-(1-methyl-1-phenylethyl)harnstoff, siehe JP-A-60087254), das als Safener für Reis gegen Schäden einiger Herbizide bekannt ist,
"Methoxyphenon" oder "NK 049" (3,3'-Dimethyl-4-methoxy-benzophenon), das als Safener für Reis gegen Schäden einiger Herbizide bekannt ist, "CSB" (1-Brom-4-(chlormethylsulfonyl)benzol) von Kumiai, (CAS-Reg.Nr. 54091-06-4), das als Safener gegen Schäden einiger Herbizide in Reis bekannt ist.

S15) Wirkstoffe, die vorrangig als Herbizide eingesetzt werden, jedoch auch
Safenerwirkung auf Kulturpflanzen aufweisen, z.B.
(2,4-Dichlorphenoxy)essigsäure (2,4-D),
(4-Chlorphenoxy)essigsäure,
(R,S)-2-(4-Chlor-o-tolyloxy)propionsäure (Mecoprop),
4-(2,4-Dichlorphenoxy)buttersäure (2,4-DB),
(4-Chlor-o-tolyloxy)essigsäure (MCPA),
4-(4-Chlor-o-tolyloxy)buttersäure,
4-(4-Chlorphenoxy)buttersäute,
3,6-Dichlor-2-methoxybenzoesäure (Dicamba),
1-(Ethoxycarbonyl)ethyl-3,6-dichlor-2-methoxybenzoat (Lactidichlor-ethyl).

Die erfindungsgemäßen Herbizid-Azol-Kombinationen sind, gegebenenfalls in Gegenwart von Safenem, zur Bekämpfung von Schadpflanzen in Pflanzenkulturen geeignet, beispielsweise in wirtschaftlich bedeutenden Kulturen wie Getreide (z.B. Weizen, Gerste, Roggen, Hafer, Reis, Mais, Hirse), Zuckerrübe, Zuckerrohr, Raps, Baumwolle und Soja. Von besonderem Interesse ist dabei die Anwendung in monokotylen Kulturen wie Getreide, z.B. Weizen, Gerste, Roggen, Hafer, Reis, Mais und Hirse.

Wenn im Rahmen dieser Beschreibung die Kurzform des "common name" eines Wirkstoffs verwendet wird, so sind damit jeweils alle gängigen Derivate, wie die Ester und Salze, und Isomere, insbesondere optische Isomere umfasst, insbesondere die handelsüblichen Form bzw. Formen. Wird mit dem "common name" ein Ester oder Salz bezeichnet, so sind damit auch jeweils alle anderen gängigen Derivate wie andere Ester und Salze, die freien Säuren und Neutralverbindungen, und Isomere, insbesondere optische Isomere umfasst, insbesondere die handelsübliche Form bzw. Formen. Die angegebenen chemischen Verbindungsnamen bezeichnen zumindest eine der von dem "common name" umfaßten Verbindungen, häufig eine bevorzugte Verbindung. Bei Sulfonamiden wie Sulfonylharnstoffen sind mit Salzen auch die umfaßt, die durch Austausch eines Wasserstoffatoms an der Sulfonamidgruppe durch ein Kation entstehen.

Erfindungsgemäß umfasst sind auch solche Herbizid-Azol-Kombinationen, die neben den Komponenten A) und B) noch ein oder mehrere weitere agrochemische Wirkstoffe anderer Struktur enthalten, z.B. aus der Gruppe der Herbizide, Insektizide, Fungizide, Safener oder Pflanzenwachstumsregulatoren. Für solche Kombinationen gelten die nachstehend insbesondere für erfindungsgemäße Kombinationen A) + B) erläuterten bevorzugten Bedingungen in erster Linie ebenfalls, sofern darin die erfindungsgemäßen Kombinationen A) + B) enthalten sind und bezüglich der betreffenden Kombination A) + B).

Von besonderem Interesse sind erfindungsgemäße Herbizid-Azol-Kombinationen mit einem Gehalt an folgenden Verbindungen A) + B):
A1.1 +B1,A1.2+B1,A2.1 +B1, A2.2+B1, A3.1 +B1, A3.2+B1,
A4.1 +B1, A4.2+B1, A5.1 +B1, A5.2+B1, A6.1 +B1, A6.2+B1,
A7.1 B1, A7.2+B1, A8.1 +B1, A8.2+B1, A9.1 +B1, A9.2+B1,
A10.1 +B1, A10.2+B1, A11.1+B1, A11.2+B1, A12.1+B1, A12.2+B1,
A13.1 +B1, A13.2+B1, A14.1+B1, A14.2+B1, A15.1+B1, A15.2+B1,
A16.1 +B1, A16.2+B1, A17.1 + B1, A17.2 + B1, A18, + B1. A18.2 + B1,
A19.1 + B1, A19.2 + B1, A20.1 + B1, A20.2+B1, A21+B1, A22+B1,
A23+B1, A24+B1, A25+B1, A26+B1. A27+B1;
A1.1 + B2, A1.2 + B2, A2.1 + B2, A2.2 + B2, A3.1 + B2, A3.2 + B2,
A4.1 + B2, A4.2 + B2, A5.1 + B2, A5.2 + B2, A6.1 + B2, A6.2 + B2,
A7.1 + B2, A7.2 + B2, A8.1 + B2, A8.2 + B2, A9.1 + B2, A9.2 + B2,
A10.1 + B2, A10.2 + B2, A11.1 + B2, A11.2 + B2, A12.1 + B2, A12.2 + B2,
A13.1 + B2, A13.2 + B2, A14.1 + B2, A14.2 + B2, A15.1 + B2, A15.2 + B2,
A16.1 + B2, A16.2 + B2, A17.1 + B2, A17.2 + B2, A18.1 + B2, A18.2 + B2,
A19.1 + B2, A19.2 + B2, A20.1 + B2, A20.2 + B2, A21 + B2, A22 + B2,
A23 + B2, A24 + B2, A25 + B2, A26 + B2, A27 + B;
A1.1 + B3, A1.2 + B3, A2.1 + B3, A2.2 + B3, A3.1 + B3, A3.2 + B3,
A4.1 + B3, A4.2 + B3, A5.1 + B3, A5.2 + B3, A6.1 + B3, A6.2 + B3,
A7.1 + B3, A7.2 + B3, A8.1 + B3, A8.2 + B3, A9.1 + B3, A9.2 + B3,
A10.1 + B3, A10.2 + B3, A11.1 + B3, A11.2 + B3, A12.1 + B3, A12.2 + B3,
A13.1 + B3, A13.2 + B3, A14.1 + B3, A14.2 + B3, A15.1 + B3, A15.2 + B3,
A16.1 + B3, A16.2 + B3, A17.1 + B3, A17.2 + B3, A18.1 + B3, A18.2 + B3,
A19.1 + B3, A19.2 + B3, A20.1 + B3, A20.2 + B3, A21 + B3, A22 + B3,
A23 + B3, A24 + B3, A25 + B3, A26 + B3, A27 + B3;
A1.1 + B4, A1.2 + B4, A2.1 + B4, A2.2 + B4, A3.1 + B4, A3.2 + B4,
A4.1 + B4, A4.2 + B4, A5.1 + B4, A5.2 + B4, A6.1 + B4, A6.2 + B4,
A7.1 + B4, A7.2 + B4, A8.1 + B4, A8.2 + B4, A9.1 + B4, A9.2 + B4,
A10.1 +B4, A10.2+B4, A11.1 +B4, A11.2+B4, A12.1 + 84, A12.2 + B4,
A13.1 + B4, A13.2 + B4, A14.1 + B4, A14.2 + B4, A15.1 + B4, A15.2 + B4,
A16.1 + B4, A16.2 + B4, A17.1 + B4, A17.2 + B4, A18.1 + B4, A18.2 + B4,
A19.1 + B4, A19.2 + B4, A20.1 + B4, A20.2 + B4, A21 + B4, A22 + B4,
A23 + B4, A24 + B4, A25 + B4, A26 + B4, A27 + B4;
A1.1 + B5, A1,2 + B5, A2.1 + B5, A2.2 + B5, A3.1 + B5, A3.2 + B5,
A4.1 + B5, A4.2 + B5, A5.1 + B5, A5.2 + B5, A6.1 + B5, A6.2 + B5,
A7.1 + B5, A7.2 + B5, A8.1 + B5, A8.2 + B5, A9.1 + B5, A9.2 + B5,
A10.1 + B5, A10.2 + B5, A11.1 + B5, A11.2 + B5, A12.1 + B5, A12.2 + B5,
A13.1 + B5, A13,2 + B5, A14.1 + B5, A14.2 + B5, A15.1 + B5, A15.2 + B5,
A16.1 + B5, A16.2 + B5, A17.1 + B5, A17.2 + 85, A18.1 + B5, A18.2 + B5,
A19.1 + B5, A19.2 + B5, A20.1 + B5, A20.2 + B5, A21 + B5, A22 + B5,
A23 + B5, A24 + B5, A25 + B5, A26 + B5, A27 + B5;
A1.1 + B6, A1.2 + B6, A2.1 + B6, A2.2 + B6, A3.1 + B6, A3.2 + B6,
A4.1 + B6, A4.2 + B6, A5.1 + B6, A5.2 + B6, A6.1 + B6, A6.2 + B6,
A7,1 + 86, A7.2 + B6, A8.1 + B6, A8.2 + B6, A9.1 + B6, A9.2 + B6,
A10.1 + B6, A10.2 + B6, A11.1 + B6, A11.2 + B6, A12.1 + B6, A12.2 + B6,
A13.1 + B6, A13.2 + B6, A14.1 + B6, A14.2 + B6, A15.1 + B6, A15.2 + B6,
A16.1 + B6, A16.2 + B6, A17.1 + B6, A17.2 + B6, A18.1 + B6, A18.2 + B6,
A19,1 + B6, A19.2 + B6, A20,1 + B6, A20.2 + B6, A21 + B6, A22 + B6,
A23 + B6, A24 + 86, A25 + B6, A26 + B6, A27 + B6;
A1.1 + B7, A1.2 + B7, A2.1 + B7, A2.2 + B7, A3.1 + B7, A3.2 + B7,
A4.1 + B7, A4.2 + B7, A5.1 + B7, A5.2 + 87, A6.1 + B7, A6.2 + B7,
A7.1 + B7, A7.2 + 87, A8.1 + B7, A8.2 + B7, A9.1 + B7, A9.2 + B7,
A10.1 + B7, A10.2 + B7, A11.1 + B7, A11.2 + B7, A12.1 + B7, A12.2 + B7,
A13.1 + B7, A13.2 + 87, A14.1 + B7, A14.2 + 87, A15.1 + 87, A15.2 + B7,
A16.1 + B7, A16.2 + B7, A17.1 + B7, A17.2 + B7, A18.1 + B7, A18.2 + B7,
A19.1 + 87, A19.2 + B7, A20.1 + B7, A20.2 + B7, A21 + B7, A22 + B7,
A23 + B7, A24 + B7, A25 + B7, A26 + B7, A27 + B7;
A1.1 + B8, A1.2 + 88, A2,1 + B8, A2.2 + B8, A3.1 + B8, A3.2 + B8,
A4.1 + B8, A4.2 + B8, A5.1 + B8, A5.2 + B8, A6.1 + B8, A6.2 + B8.
A7.1 + B8, A7.2 + B8, A8.1 + B8, A8.2 + B8, A9.1 + B8, A9.2 + B8,
A10.1 + B8, A10.2 + B8, A11.1 + B8, A11.2 + B8, A12.1 + B8, A12.2 + B8,
A13.1 + B8, A13.2 + 88, A14.1 + B8, A14.2 + B8, A15.1 + B8, A15.2 + B8,
A16.1 + B8, A16.2 + B8, A17.1 + B8, A17.2 + B8, A18.1 + B8, A18.2 + B8,
A19.1 + B8, A19.2 + B8. A20.1 + B8, A20.2 + B8, A21 + B8, A22 + B8,
A23 + B8, A24 + B8, A25 + B8, A26 + B8, A27 + B8;
A1.1 + B9, A1.2 + B9, A2.1 + B9, A2.2 + B9, A3.1 + B9, A3.2 + B9,
A4.1 + 89, A4.2 + B9, A5.1 + B9, A5.2 + B9, A6.1 + B9, A6.2 + B9,
A7.1 + B9, A7.2 + B9, A8.1 + B9, A8.2 + B9, A9.1 + B9, A9.2 + B9,
A10.1 + B9, A10.2 + B9, A11.1 + B9, A11.2 + 89, A12.1 + B9, A12.2 + B9,
A13.1 + B9, A13.2 + B9, A14.1 + B9, A14.2 + B9, A15.1 + 89, A15.2 + B9,
A16.1 + B9, A16.2 + B9, A17.1 + B9, A17.2 + B9, A18.1 + B9, A18.2 + B9,
A19.1 + B9. A19.2 + B9, A20.1 + B9, A20.2 + B9, A21 + B9. A22 + B9.
A23 + B9, A24 + B9, A25 + B9, A26 + B9, A27 + B9;
A1.1 + B10, A1.2 + B10, A2.1 + B10, A2.2 + B10, A3.1 + B10, A3.2 + B10,
A4.1 + B10, A4.2 + B10, A5.1 + B10, A5.2 + B10, A6.1 + B10, A6.2 + B10,
A7.1 + B10, A7.2 + B10, A8.1 + B10, A8.2 + B10, A9.1 + B10, A9.2 + B10.
A10.1 + B10, A10.2 + B10, A11.1 + B10, A11.2 + B10,A12.1 + B10, A12.2 + B10,
A13,1 + B10, A13.2 + B10, A14.1 + B10, A14.2 + B10, A15.1 + B10, A15.2 + B10,
A16.1 + B10, A16.2 + B10, A17.1 + B10. A17.2 + B10, A18.1 + B10, A18.2 + B10,
A19.1 + B10, A19.2 + B10, A20.1 + B10, A20.2 + B10, A21 + B10, A22 + B10,
A23 + B10, A24 + B10, A25 + B10, A26 + B10, A27 + B10;
A1.1 + B11, A1.2+B11, A2.1+B11. A2.2+B11, A3.1-B11, A3.2+B11,
A4.1 + B11, A4.2 + B11, A5.1 + B11, A5.2 + B11, A6.1 + B11, A6.2 + B11,
A7.1 +B11, A7.2+B11,A8.1 +B11,A8.2+B11,A9.1 +B11,A9.2+B11,
A10.1 +B11,A10.2+B11,A11.1 +B11,A11.2+B11,A12.1+B11,A12.2+B11,
A13.1 +B11, A13.2+B11, A14.1 +B11,A14.2+B11,A15.1 +B11,A15.2+B11,
A16.1 +B11, A16.2+B11, A17.1 +B11,A17.2+B11,A18.1 +B11,A18.2+B11,
A19.1 +B11, A19.2 + B11, A20.1 +B11, A20.2+B11, A21 +B11, A22+B11,
A23 + 811, A24 + 811, A25 + 811, A26 + B11, A27 + 811;
A1.1 +B12, A1.2+B12, A2.1+B12, A2.2+B12, A3.1+B12, A3.2+B12,
A4.1 + B12, A4.2 + B12, A5.1 + B12, A5.2 + B12, A6.1 + B12, A6.2 + B12,
A7.1 + B12, A7.2 + B12, A8.1 + B12, A8.2 + B12, A9.1 + B12, A9.2 + B12,
A10.1 +B12, A10.2+B12, A11.1 + B12, A11.2 + B12, A12.1 + B12, A12.2 + B12,
A13.1 + B12, A13.2 + B12, A14.1 + B12, A14.2 + B12, A15.1 + B12, A15.2 + B12,
A16.1 + B12, A16.2 + B12, A17.1 + B12, A17,2 + B12, A18.1 + B12, A18.2 + B12,
A19.1 + B12, A19.2 + B12, A20.1 + B12, A20.2 + B12, A21 + B12, A22 + B12,
A23 + B12, A24 + B12, A25 + B12, A26 + B12, A27 + B12;
A1.1 +B13, A1.2 + B13, A2.1 + B13, A2.2 + B13, A3.1 + B13, A3.2 + B13,
A4.1 + B13, A4.2 + B13, A5.1 + B13, A5.2 + B13, A6.1 + B13, A6.2 + B13,
A7.1 + B13, A7.2 + B13, A8.1 + B13, A8.2 + B13, A9.1 + B13, A9.2 + B13,
A10.1 + B13, A10.2 + B13, A11.1 + B13, A11.2 + B13, A12.1 + B13, A12.2 + B13,
A13.1 + B13, A13.2 + B13, A14.1 + B13, A14.2 + B13, A15.1 + B13, A15.2 + B13,
A16.1 + B13, A16.2 + B13, A17.1 + B13, A17.2 + B13, A18.1 + B13, A18.2 + B13,
A19.1 + B13, A19.2 + B13, A20.1 + B13, A20.2 + B13, A21 + B13, A22 + B13,
A23 + B13, A24 + B13, A25 + B13, A26 + B13, A27 + B13;
A1.1 + B14, A1.2 + B14, A2.1 + B14, A2.2 + B14, A3.1 + B14, A3.2 + B14,
A4.1 + B14, A4.2 + B14, A5.1 + B14, A5.2 + B14, A6.1 + B14, A6.2 + B14,
A7.1 + B14, A7.2 + B14, A8.1 + B14, A8.2 + B14, A9.1 + B14, A9.2 + B14,
A10.1 + B14, A10.2 + B14, A11.1 + B14, A11.2 + B14, A12.1 + B14, A12.2 + B14,
A13.1 + B14, A13.2 + B14, A14.1 + B14, A14.2 + B14, A15.1 + B14, A15.2 + B14,
A16.1 + B14, A16.2 + B14, A17.1 + B14, A17.2 + B14, A18.1 + B14, A18.2 + B14,
A19.1 + B14, A19.2 + B14, A20.1 + B14, A20.2 + B14, A21 + B14, A22 + B14,
A23 + B14, A24 + B14, A25 + B14, A26 + B14, A27 + B14;
A1.1 + B15, A1.2 + B15, A2.1 + B15, A2.2 + B15, A3.1 + B15, A3.2 + B15,
A4.1 + B15, A4.2 + B15, A5.1 + B15, A5.2 + B15, A6.1 + B15, A6.2 + B15,
A7.1 + B15, A7.2 + B15, A8.1 + B15, A8.2 + B15, A9.1 + B15, A9.2 + B15,
A10.1 + B15, A10.2 + B15, A11.1 + B15, A11.2 + B15, A12.1 + B15, A12.2 + B15,
A13.1 + B15, A13.2 + B15, A14.1 + B15, A14.2 + B15, A15.1 + B15, A15.2 + B15,
A16.1 + B15, A16.2 + B15, A17.1 + B15, A17.2 + B15, A18.1 + B15, A18.2 + B15,
A19.1 + B15, A19.2 + B15, A20.1 + B15, A20.2 + B15, A21 + B15, A22 + B15,
A23 B15, A24 + B15, A25 + B15, A26 + B15, A27 + B15;
A1.1 + B16, A1.2 + B16, A2.1 + B16, A2.2 + B16, A3.1 + B16, A3.2 + B16,
A4.1 + B16, A4.2 + B16, A5.1 + B16, A5.2 + B16, A6.1 + B16, A6.2 + B16,
A7.1 + B16, A7.2 + B16, A8.1 + B16, A8.2 + B16, A9.1 + B16, A9.2 + B16,
A10.1 + B16, A10.2 + B16, A11.1 + B16, A11.2 + B16, A12.1 + B16, A12.2 + B16,
A13.1 + B16, A13.2 + B16, A14.1 + B16, A14.2 + B16, A15.1 + B16, A15.2 + B16,
A16.1 + B16, A16.2 + B16, A17.1 + B16, A17.2 + B16, A18.1 + B16, A18.2+B16,
A19.1 + 816, A19.2 + B16, A20.1 + B16, A20.2 + B16, A21 + B16, A22 + B16, A23 + B16, A24 + B16, A25 + B16, A26 + B16, A27 + B16;
A1.1 + B17, A1.2 + B17, A2.1 + B17, A2.2 + B17, A3.1 + B17, A3.2 + B17,
A4.1 + B17, A4.2 + B17, A5.1 + B17, A5.2 + B17, A6.1 + B17, A6.2 + B17,
A7.1 + B17, A7.2 + B17, A8.1 + B17, A8.2 + B17, A9.1 + B17, A9.2 + B17,
A10.1 + B17, A10.2 + B17, A11.1 + B17, A11.2 + B17, A12.1 + B17, A12.2 + B17,
A13.1 + B17, A13.2 + B17, A14.1 + B17, A14.2 + B17, A15.1 + B17, A15.2 + B17, A16.1 + B17, A16.2 + B17, A17.1 + B17, A17.2 + B17, A18.1 + B17, A18.2 + B17, A19.1 + B17, A19.2 + B17, A20.1 + B17, A20.2 + B17, A21 + B17, A22 + B17, A23 + B17, A24 + B17, A25 + B17, A26 + B17, A27 + B17;
A1.1 + B18, A1.2 + B18, A2.1 + 818, A2.2 + B18, A3.1 + B18, A3.2 + B18,
A4.1 + B18, A4.2 + B18, A5.1 + B18, A5.2 + B18, A6.1 + B18, A6.2 + B18,
A7.1 + B18, A7.2 + B18, A8.1 + B18, A8.2 + B18, A9.1 + B18, A9.2 + B18,
A10.1 + B18, A10.2 + B18, A11.1 + B18, A11.2 + B18, A12.1 + B18, A12.2 + B18, A13.1 + B18, A13.2 + B18, A14.1 + B18, A14.2 + B18, A15.1 + B18, A15.2 + B18, A16.1 + B18, A16.2 + B18, A17.1 + B18, A17.2 + B18, A18.1 + B18, A18.2 + B18, A19.1 + B18, A19.2 + B18, A20.1 + B18, A20.2 + B18, A21 + B18, A22 + B18, A23 + B18, A24 + B18, A25 + B18, A26 + B18, A27 + B18;
A1.1 + B19, A1.2 + B19, A2.1 + B19, A2.2 + B19, A3.1 + B19, A3.2 + B19.
A4.1 + B19, A4.2 + B19, A5.1 + B19, A5.2 + B19, A6.1 + B19, A6.2 + B19,
A7.1 + B19, A7.2 + B19, A8.1 + B19, A8.2 + B19, A9.1 + B19, A9.2 + B19,
A10.1 + B19, A10.2 + B19, A11.1 + B19, A11.2 + B19, A12.1 + B19, A12.2 + B19, A13.1 + B19, A13.2 + B19, A14.1 + B19, A14.2 + B19, A15.1 + B19, A15.2 + B19, A16.1 + B19, A16.2 + B19, A17.1 + B19, A17.2 + B19, A18.1 + B19, A18.2 + B19, A19.1 + B19, A19.2 + B19, A20.1 + B19, A20.2 + B19, A21 + B19, A22 + B19, A23 + B19, A24 + B19, A25 + B19, A26 + B19, A27 + B19;
A1.1 + B20, A1.2 + B20, A2.1 + 820, A2.2 + B20, A3.1 + B20, A3.2 + B20,
A4.1 + B20, A4.2 + B20, A5.1 + B20, A5.2 + B20, A6.1 + B20, A6.2 + B20,
A7.1 + B20, A7.2 + B20, A8.1 + B20, A8.2 + B20, A9.1 + B20, A9.2 + B20,
A10.1 + B20, A10.2 + B20, A11.1 + B20, A11.2 + B20, A12.1 + B20, A12.2 + B20,
A13.1 + B20, A13.2 + B20, A14.1 + B20, A14,2 + B20, A15.1 + B20, A15.2 + B20,
A16.1 + B20, A16.2 + B20, A17.1 + B20, A17.2 + B20, A18.1 + B20, A18.2 + B20,
A19.1 + B20, A19.2 + B20, A20.1 + B20, A20.2 + B20, A21 + B20, A22 + B20,
A23 + B20, A24 + B20, A25 + B20, A26 + B20, A27 + B20;
A1.1 + B21, A1.2 + B21, A2.1 + B21, A2.2 + B21, A3.1 + B21, A3.2 + B21,
A4.1 + B21, A4.2 + B21, A5.1 + B21, A5.2 + B21, A6.1 + B21, A6.2 + B21,
A7.1 + B21, A7.2 + B21, A8.1 + B21, A8.2 + B21, A9.1 + B21, A9.2 + B21,
A10.1 + B21, A10.2 + B21, A11.1 + B21, A11.2 + B21, A12.1 + B21, A12.2 + B21,
A13.1 + B21, A13.2 + B21, A14.1 + B21, A14.2 + B21, A15.1 + B21, A15.2 + B21,
A16.1 + B21, A16.2 + B21, A17.1 + B21, A17.2 + B21, A18.1 + B21, A18.2 + B21,
A19.1 + B21, A19.2 + B21, A20.1 + B21, A20.2 + B21, A21 + B21, A22 + B21,
A23 + B21, A24 + B21, A25 + B21, A26 + B21, A27 + B21;
A1.1 + B22, A1.2 + B22, A2.1 + B22, A2.2 + B22, A3.1 + B22, A3.2 + B22,
A4.1 + 822, A4.2 + B22, A5.1 + B22, A5.2 + B22, A6.1 + B22, A6.2 + B22,
A7.1 + B22, A7.2 + B22, A8.1 + B22, A8.2 + B22, A9.1 + B22, A9.2 + B22,
A10.1 + B22, A10.2 + B22, A11.1 + B22, A11.2 + B22, A12.1 + B22, A12.2 + B22,
A13.1 + B22, A13.2 + B22, A14.1 + B22, A14.2 + B22, A15.1 + B22, A15.2 + B22,
A16.1 + B22, A16.2 + B22, A17.1 + B22, A17.2 + B22, A18.1 + B22, A18.2 + B22,
A19.1 + B22, A19.2 + B22, A20.1 + B22, A20.2 + B22, A21 + B22, A22 + B22,
A23 + B22, A24 + B22, A25 + B22, A26 + B22, A27 + B22;
A1.1 + B23, A1.2 + B23, A2.1 + B23, A2.2 + B23, A3.1 + B23, A3.2 + B23,
A4.1 + B23, A4.2 + B23, A5.1 + B23, A5.2 + B23, A6.1 + B23, A6.2 + B23,
A7.1 + B23, A7.2 + B23, A8.1 + B23, A8.2 + B23, A9.1 + B23, A9.2 + B23,
A10.1 + B23, A10.2 + B23, A11.1 + B23, A11.2 + B23, A12.1 + B23, A12.2 + B23,
A13.1 + B23, A13.2 + B23, A14.1 + B23, A14.2 + B23, A15.1 + B23, A15.2 + B23,
A16.1 + B23, A16.2 + B23, A17.1 + B23, A17.2 + B23, A18.1 + B23, A18.2 + B23,
A19.1 + B23, A19.2 + B23, A20.1 + B23, A20.2 + B23, A21 + B23, A22 + B23,
A23 + B23, A24 + B23, A25 + B23, A26 + B23, A27 + B23;
A1.1 + B24, A1.2 + B24, A2.1 + B24, A2.2 + B24, A3.1 + B24, A3.2 + B24,
A4.1 + B24, A4.2 + 824, A5.1 + B24, A5.2 + B24, A6.1 + B24, A6.2 + B24,
A7.1 + B24, A7.2 + B24, A8.1 + B24, A8.2 + B24, A9.1 + B24, A9.2 + B24,
A10.1 + B24, A10.2 + B24, A11.1 + B24, A11.2 + B24, A12.1 + B24, A12.2 + B24,
A13.1 + 824, A13.2 + B24, A14.1 + B24, A14.2 + B24, A15.1 + B24, A15.2 + B24,
A16.1 + B24, A16.2 + B24, A17.1 + B24, A17.2 + B24, A18.1 + 824, A18.2 + 824,
A19.1 + B24, A19.2 + B24, A20.1 + B24, A20.2 + B24, A21 + B24, A22 + B24,
A23 + B24, A24 + B24, A25 + B24, A26 + B24, A27 + B24;
A1.1 + 825, A1.2 + B25, A2.1 + B25, A2.2 + B25, A3.1 + B25, A3.2 + B25,
A4.1 + B25, A4.2 + B25, A5.1 + B25, A5.2 + B25, A6.1 + B25, A6.2 + B25,
A7.1 + B25, A7.2 + B25, A8.1 + B25, A8.2 + B25, A9.1 + B25, A9.2 + B25,
A10.1 + B25, A10.2 + B25, A11.1 + B25, A11.2 + B25, A12.1 + B25, A12.2 + B25,
A13.1 + 825, A13.2 + B25, A14.1 + B25, A14.2 + B25, A15.1 + B25, A15.2 + B25,
A16.1 + 825, A16.2 + B25, A17.1 + B25, A17.2 + B25, A18.1 + B25, A18.2 + B25,
A19.1 + B25, A19.2 + B25, A20.1 + B25, A20.2 + B25, A21 + B25, A22 + B25,
A23 + B25, A24 + B25, A25 + B25, A26 + B25, A27 + B25;
A1.1 + B26, A1.2 + B26, A2.1 + B26, A2.2 + B26, A3.1 + 826, A3.2 + B26,
A4.1 + 826, A4.2 + B26, A5.1 + B26, A5.2 + B26, A6.1 + B26, A6.2 + B26,
A7.1 + B26, A7.2 + B26, A8.1 + B26, A8.2 + B26, A9.1 + B26, A9.2 + B26,
A10.1 + 826, A10.2 + B26, A11.1 + B26, A11.2 + B26, A12.1 + B26, A12.2 + B26,
A13.1 + B26, A13.2 + B26, A14.1 + B26, A14.2 + B26, A15.1 + 826, A15.2 + B26,
A16.1 + B26, A16.2 + B26, A17.1 + B26, A17.2 + B26, A18.1 + B26, A18.2 + B26,
A19.1 + B26, A19.2 + B26, A20.1 + B26, A20.2 + B26, A21 + B26, A22 + B26,
A23 + B26, A24 + B26, A25 + B26, A26 + B26, A27 + B26;
A1.1 + B27, A1.2 + B27, A2.1 + B27, A2.2 + B27, A3.1 + B27, A3.2 + B27,
A4.1 + B27, A4.2 + B27, A5.1 + B27, A5.2 + B27, A6.1 + B27, A6.2 + B27,
A7.1 + B27, A7.2 + B27, A8.1 + B27, A8.2 + B27, A9.1 + B27, A9.2 + B27,
A10.1 + B27, A10.2 + B27, A11.1 + B27, A11.2 + 827, A12.1 + B27, A12.2 + B27,
A13.1 + B27, A13.2 + B27, A14.1 + B27, A14.2 + B27, A15.1 + B27, A15.2 + B27,
A16.1 + B27, A16.2 + B27, A17.1 + B27, A17.2 + B27, A18.1 + B27, A18.2 + B27,
A19.1 + B27, A19.2 + B27, A20.1 + B27, A20.2 + B27, A21 + B27, A22 + B27,
A23 + B27, A24 + B27, A25 + B27, A26 + B27, A27 + B27;
A1.1 + B28, A1.2 + B28, A2.1 + B28, A2.2 + B28, A3.1 + B28, A3.2 + B28,
A4.1 + B28, A4.2 + B28, A5.1 + B28, A5.2 + B28, A6.1 + B28, A6.2 + B28,
A7.1 + B28, A7.2 + B28, A8.1 + B28, A8.2 + B28, A9.1 + 828, A9.2 + B28,
A10.1 + B28, A10.2 + B28, A11.1 + B28, A11.2 + B28, A12.1 + B28, A12.2 + B28,
A13.1 + B28, A13.2 + B28, A14.1 + B28, A14.2 + B28, A15.1 + 828, A15.2 + 828,
A16.1 + B28, A16.2 + B28, A17.1 + B28, A17.2 + 828, A18.1 + B28, A18.2 + B28,
A19.1 + B28, A19.2 + B28, A20.1 + B28, A20.2 + B28, A21 + B28, A22 + B28,
A23 + B28, A24 + B28, A25 + B28, A26 + B28, A27 + B28;
A1.1 + B29, A1.2 + B29, A2.1 + B29, A2.2 + B29, A3.1 + B29, A3.2 + B29,
A4.1 + B29, A4.2 + B29, A5.1 + B29, A5.2 + B29, A6.1 + B29, A6.2 + B29,
A7.1 + B29, A7.2 + B29, A8.1 + B29, A8.2 + B29, A9.1 + 829, A9.2 + 829,
A10.1 + B29, A10.2 + B29, A11.1 + B29, A11.2 + B29, A12.1 + B29, A12.2 + B29,
A13.1 + B29, A13.2 + B29, A14.1 + B29, A14.2 + B29, A15.1 + B29, A15.2 + B29,
A16.1 + B29, A16.2 + B29, A17.1 + B29, A17.2 + B29, A18.1 + B29, A18.2 + B29,
A19.1 + B29, A19.2 + B29, A20.1 + B29, A20.2 + B29, A21 + B1, A22 + B1,
A23 + B1, A24 + B1, A25 + B1, A26 + B1, A27 + B1;
A1.1 + B30, A1.2 + B30, A2.1 + B30, A2.2 + B30, A3.1 + B30, A3.2 + B30,
A4.1 + B30, A4.2 + B30, A5.1 + B30, A5.2 + B30, A6.1 + B30, A6.2 + B30,
A7.1 + B30, A7.2 + B30, A8.1 + B30, A8.2 + B30, A9.1 + B30, A9.2 + 830,
A10.1 + B30, A10.2 + B30, A11.1 + B30, A11.2 + B30, A12.1 + B30, A12.2 + B30,
A13.1 + B30, A13.2 + B30, A14.1 + B30, A14.2 + B30, A15.1 + B30, A15.2 + B30,
A16.1 + B30, A16.2 + B30, A17.1 + B30, A17.2 + B30, A18.1 + B30, A18.2 + 830, A19.1 + B30, A19.2 + B30, A20.1 + B30, A20.2 + B30, A21 + B30, A22 + B30, A23 + B30, A24 + B30, A25 + B30, A26 + B30, A27 + B30;
A1.1 + B31, A1.2 + B31, A2.1 + B31, A2.2 + B31, A3.1 + B31, A3.2 + B31,
A4.1 + B31, A4.2 + B31, A5.1 + B31, A5.2 + B31, A6.1 + B31, A6.2 + B31,
A7.1 + B31, A7.2 + B31, A8.1 + B31, A8.2 + B31, A9.1 + B31, A9.2 + B31,
A10.1 + B31, A10.2 + B31, A11.1 1 + B31, A11.2 + B31, A12.1 + B31, A12.2 + B31, A13.1 + B31, A13.2 + B31, A14.1 + B31, A14.2 + B31, A15.1 + B31, A15.2 + B31, A16.1 + B31, A16.2 + B31, A17.1 + B31, A17.2 + B31, A18.1 + B31, A18.2 + B31, A19.1 + B31, A19.2 + B31, A20.1 + B31, A20.2 + B31, A21 + B31, A22 + B31, A23 + B31, A24 + B31, A25 + B31, A26 + B31, A27 + B31;
A1.1 + B32, A1.2 + B32, A2.1 + B32, A2.2 + B32, A3.1 + B32, A3.2 + B32,
A4.1 + B32, A4.2 + B32, A5.1 + B32, A5.2 + B32, A6.1 + B32, A6.2 + B32,
A7.1 + B32, A7.2 + B32, A8.1 + B32, A8.2 + B32, A9.1 + B32, A9.2 + B32,
A10.1 + B32, A10.2 + B32, A11.1 + B32, A11.2 + B32, A12.1 + B32, A12.2 + B32, A13.1 + B32, A13.2 + B32, A14.1 + B32, A14.2 + B32, A15.1 + B32, A15.2 + B32, A16.1 + B32, A16.2 + B32, A17.1 + B32, A17.2 + B32, A18.1 + B32, A18.2 + B32, A19.1 + B32, A19.2 + B32, A20.1 + B32, A20.2 + B32, A21 + B32, A22 + B32, A23 + B32, A24 + B32, A25 + B32, A26 + B32, A27 + B32;
A1.1 + B33, A1.2 + B33, A2.1 + B33, A2.2 + B33, A3.1 + B33, A3.2 + B33,
A4.1 + B33, A4.2 + B33, A5.1 + B33, A5.2 + B33, A6.1 + B33, A6.2 + B33,
A7.1 + B33, A7.2 + B33, A8.1 + B33, A8.2 + B33, A9.1 + B33, A9.2 + B33,
A10.1 + B33, A10.2 + B33, A11.1 + B33, A11.2 + B33, A12.1 + B33, A12.2 + B33, A13.1 + B33, A13.2 + B33, A14.1 + B33, A14.2 + B33, A15.1 + B33, A15.2 + B33, A16.1 + B33, A16.2 + B33, A17.1 + 833, A17.2 + B33, A18.1 + B33, A18.2 + B33, A19.1 + B33, A19.2 + B33, A20.1 + B33, A20.2 + B33, A21 + B33, A22 + B33, A23 + B33, A24 + B33, A25 + B33, A26 + B33, A27 + B33;
A1.1 + B34, A1.2 + B34, A2.1 + B34, A2.2 + B34, A3.1 + B34, A3.2 + B34,
A4.1 + B34, A4.2 + B34, A5.1 + B34, A5.2 + B34, A6.1 + B34, A6.2 + B34,
A7.1 + B34, A7.2 + B34, A8.1 + B34, A8.2 + B34, A9.1 + B34, A9.2 + B34,
A10.1 + B34, A10.2 + B34, A11.1 + 834, A11.2 + B34, A12.1 + B34, A12.2 + B34,
A13.1 + B34, A13.2 + B34, A14.1 + B34, A14.2 + B34, A15.1 + B34, A15.2 + B34,
A16.1 + B34, A16.2 + B34, A17.1 + B34, A17.2 + B34, A18.1 + B34, A18.2 + B34,
A19.1 + B34, A19.2 + B34, A20.1 + B34, A20,2 + B34, A21 + B34, A22 + 834,
A23 + B34, A24 + B34, A25 + B34, A26 + B34, A27 + B34;
A1.1 + B35, A1.2 + B35, A2.1 + B35, A2.2 + B35, A3.1 + B35, A3.2 + B36,
A4,1 + B35, A4.2 + B35, A5.1 + B35, A5.2 + B35, A6.1 + B35, A6.2 + B35,
A7.1 + B35, A7.2 + B35, A8.1 + B35, A8.2 + B35, A9.1 + B35, A9.2 + B35,
A10.1 + B35, A10.2 + B35, A11.1 + B35, A11.2 + B35, A12.1 + B35, A12.2 + B35,
A13.1 + B35, A13.2 + B35, A14,1 + B35, A14,2 + B35, A15.1 + B35, A15.2 + B35,
A16.1 + B35, A16.2 + B35, A17.1 + B35, A17.2 + B35, A18.1 + B35, A18.2 + B35,
A19.1 + B35, A19.2 + B35, A20.1 + B35, A20.2 + B35, A21 + B35, A22 + B35,
A23 + B35, A24 + B35, A25 + B35, A26 + B35, A27 + B35;

Darüber hinaus kann jede der vorgenannten Wirkstoffkombinationen noch einen Safener enthalten, insbesondere einen Safener aus der Gruppe Mefenpyr-diethyl (S1-1), Isoxadifen-ethyl (S1-11), Cloquintocet-methyl (S2-1) und Cyprosulfamide (S4-1).

Es kann sinnvoll sein, einen oder mehrere Wirkstoffe A) mit mehreren Wirkstoffen B) zu kombinieren, oder mehrere Wirkstoffe A) mit einem oder mehreren Wirkstoffen B) zu kombinieren. Weiterhin können die erfindungsgemäßen Kombinationen zusammen mit anderen agrochemischen Wirkstoffen beispielsweise aus der Gruppe der Safener, Fungizide, Herbizide, insektizide und Pflanzenwachstumsregulatoren sowie mit im Pflanzenschutz üblichen Zusatzstoffen wie Haft-, Netz-, Dispergier-, Emulgier-, Konservierungs-, Frostschutz- und Lösungsmitteln, Füll- und Trägerstoffen, Entschäumern, Verdunstungshemmern oder Mitteln, die den pH-Wert oder die Viskosität beeinflussen eingesetzt werden.

Die erfindungsgemäßen Kombinationen weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden durch die Wirkstoffe gut erfaßt. Dabei können die Substanzen z.B. im Vorsaat-, Vorauflauf- und/oder Nachauflaufvertahren ausgebracht werden, z.B. gemeinsam oder getrennt. Bevorzugt ist die Anwendung im Nachauflaufverfiahren,

Im einzelnen seien beispielhaft einige Vertreter der mono- und dikotylen Unkrautflora genannt, die durch die erfindungsgemäßen Kombinationen kontrolliert werden können, ohne daß durch die Nennung eine Beschränkung auf bestimmte Arten erfolgen soll.

Auf der Seite der monokotylen Unkrautarten werden z,B. Avena spp., Alopecurus spp., Brachiara spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z,B. Abutilon spp., Amaranthus spp., Chenopodium spp., Chrysanthemum spp., Galium spp. wie Galium aparine, lpomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Werden die erfindungsgemäßen Kombinationen vor oder während der Keimphase auf die Erdoberfläche appliziert, so wird das Auflaufen der Unkrautkeimlinge gehemmt oder vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen Kombinationen zeichnen sich durch eine schnell einsetzende und lang andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Wirkstoffen A) und B) so gering eingestellt werden können, daß ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht, was z.B. zu einem verbesserten Nachbauverhalten führen kann.

Bei kombinierter Anwendung der Wirkstoffe A) und B) treten in bevorzugter Ausführungsform überadditive (= synergistische) herbizide Effekte auf. Dabei ist die herbizide Wirkung der Kombination stärker als die zu erwartende Summe der Wirkungen der eingesetzten Einzelwirkstoffe. Die synergistischen Effekte erlauben eine Reduzierung der Aufwandmenge, die Bekämpfung eines breiteren Spektrums von Unkräutern und Ungräsem, einen schnelleren Einsatz der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen.

Obgleich die erfindungsgemäßen Kombinationen eine ausgezeichnete herbizide Aktivität gegenüber mono- und dikotylen Schadpflanzen aufweisen, werden die Kulturpflanzen nur unwesentlich oder gar nicht geschädigt.

Darüberhinaus weisen die erfindungsgemäßen Kombinationen teilweise hervorragende wachstumsregulatorische Eigenschaften bei den Kulturpflanzen auf. Sie greifen regulierend in den pflanzeneigenen Stoffwechsel ein und können damit zur gezielten Beeinflussung von Pflanzeninhaltsstoffen und zur Emteerleichterung wie z.B. durch Auslösen von Desikkation und Wuchsstauchung eingesetzt werden. Desweiteren eignen sie sich auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da Ernteverluste beim Lagern hierdurch verringert oder völlig verhindert werden können.

Aufgrund ihrer herbiziden und pflanzenwachstumsregulatorisehen Eigenschaften können die erfindungsgemäßen Kombinationen auch zur Bekämpfung von Schadpflanzen in gentechnisch veränderten oder durch Mutationsselektion erhaltenen Kulturpflanzen eingesetzt werden. Diese Kulturpflanzen zeichnen sich in der Regel durch besondere vorteilhafte Eigenschaften aus, wie Resistenzen gegenüber herbiziden Mitteln oder Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind z.B. transgene Pflanzen mit erhöhtem Stärkegehalt oder veränderter Qualität der Stärke oder solche mit anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten (siehe z.B. US 5,162,602; US 4,761,373; US 4,443,971). Alternativ können neue Pflanzen mit veränderten Eigenschaften mit Hilfe gentechnischer Verfahren erzeugt werden (siehe z. B. EP-A-0221044, EP-A-0131624), Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit
   Bacillus thuringiensis-Toxine (Bt- Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci, USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der vorliegenden Erfindung ist weiterhin auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Reis, Mais und Hirse, wobei man ein oder mehrere Wirkstoffe A) und einen oder mehrere Wirkstoffe B) gemeinsam oder getrennt auf die Pflanzen, Pflanzenteile, Pflanzensamen oder die Fläche auf der die Pflanzen wachsen, z.B. die Anbaufläche, appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Gegenstand der Erfindung ist auch die Verwendung der erfindungsgemäßen Kombinationen zur Bekämpfung von Schadpflanzen, vorzugsweise in Pflanzenkulturen.

Die erfindungsgemäßen Kombinationen können auch nicht-selektiv zur Bekämpfung unerwünschten Pflanzenwuchses eingesetzt werden, z.B. in Plantagenkulturen, an Wegrändem, Plätzen, Industrieanlagen oder Eisenbahnanlagen.

Die erfindungsgemäßen Kombinationen können sowohl als Mischformulierungen der Komponenten A) und B), gegebenenfalls mit weiteren agrochemischen Wirkstoffen und/oder Zusatzstoffen vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Komponenten A) und B) oder deren Kombinationen können auf verschiedene Art formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), wasserlösliche Konzentrate, emulgierbare Konzentrate (EC), wäßrige Lösungen (SL), Emulsionen (EW) wie Öl-in-Wasser und Wasser-in-Öl-Emulsionen, versprühbare Lösungen oder Emulsionen, Suspensionskonzentrate (SC oder FS), Dispersionen auf Öbasis (OD) oder auf Wasserbasis, Suspoemulsionen (SE), Stäubemittel (DP), Beizmittel, Granulate, z.B. zur Boden- oder Streuapplikation oder wasserdispergierbare Granulate (WDG) oder wasseremulgierbare Granulate (WEG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticide Formulations", Marcel Dekker N.Y., 1973; K. Martens, "Spray Drying Handbook", 3rd Ed. 1979, G. Goodwin Ltd. London.
Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Agents", Chem. Publ. Co. Inc., N.Y.1964; Schönfeldt, "Grenzflächenaktive Äthylenoxidaddukte", Wiss. Verlagsgesellschaft, Stuttgart 1976, Winnacker-Küchler, "Chemische Technologie", Band 7, C. Hauser Verlag München, 4. Aufl, 1986.

Auf der Basis dieser Formulierungen lassen sich auch Kombinationen mit anderen agrochemischen Wirkstoffen, wie anderen Herbiziden, Fungiziden, Insektiziden, sowie Safenem, Düngemitteln und/oder Wachstumsregulatoren herstellen, z.B, in Form einer Fertigformulierung oder als Tankmix.

Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxothyllerte Alkylphenole, polyethoxylierte Fettalkohole oder -Fettamine, Alkansulfonate oder Alkylbenzolsulfonate, ligninsulfonsaures Natrium, 2,2'-dinaphthylmethan-6,6'-disulfonsaures Natrium, dibutylnaphthalin-suffonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Suspensionskonzentrate (SC) können auf Wasser- oder Ölbasis sein, Sie können beispielsweise durch Naß-Vermahlung mittels handelsüblicher Perlmühlen und gegebenenfalls Zusatz von weiteren Tensiden, wie sie z.B. oben bei den anderen Formulierungstypen bereits aufgeführt sind, hergestellt werden.

Emulsionen, z.B. Öl-in-Wasser-Emulsionen (EW), lassen sich beispielsweise mittels Rührern, Kolloidmühlen und/oder statischen Mischern unter Verwendung von wäßrigen organischen Lösungsmitteln und gegebenenfalls von weiteren Tensiden, wie sie z.B. oben bei den anderen Formulierungstypen bereits aufgeführt sind, herstellen.

Granulate können entweder durch Verdüsen des Wirkstoffs auf adsorptionsfähiges, granuliertes Inertmaterial hergestellt werden oder durch Aufbringen von Wirkstoffkonzentraten mittels Klebemitteln, z.B, Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weisegewünschtenfalls in Mischung mit Düngemitteln - granuliert werden. Wasserdispergierbare Granulate werden in der Regel nach den üblichen Verfahren wie Sprühtrocknung, Wirbelbett-Granulierung, Teller-Granulierung, Mischung mit Hochgeschwindigkeitsmischem und Extrusion ohne festes Inertmaterial hergestellt. Zur Herstellung von Teller-, Fließbett-, Extruder- und Sprühgranulate siehe z.B. Verfahren in "Spray-Drying Handbook" 3rd ed.1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57. Für weitere Einzelheiten zur Formulierung von Pttanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Formulierungen enthalten in der Regel 0,1 bis 99 Gewichtsprozent, insbesondere 2 bis 95 Gew.-%, Wirkstoffe A) und/oder B), wobei je nach Formulierungsart folgende Konzentrationen üblich sind: In Spritzputvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.%, betragen. Staubförmige Formulierungen enthalten meistens 5 bis 20 Gew.-% an Wirkstoff, versprühbare Lösungen etwa 0,2 bis 25 Gew.% Wirkstoff. Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Zusatzstoffe wie Haft-, Netz-, Dispergier-, Emulgier-, Konservierungs-, Frostschutz- und Lösungsmittel, Füll-, Farb- und Trägerstoffe, Entschäumer, Verdunstungshemmer oder Mittel, die den pH-Wert oder die Viskosität beeinflussen.

Die herbizide Wirkung der erfindungsgemäßen Herbizid-Azol-Kombinationen kann z.B. durch oberflächenaktive Substanzen verbessert werden, vorzugsweise durch Netzmittel aus der Reihe der Fettalkohol-Polyglykolether. Die Fettalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können nichtionisch vorliegen, oder ionisch, z.B. in Form von Fettalkohol-Polyglykolethersulfaten, vorliegen, die z.B. als Alkalisalze (z.B. Natrium- und Kaliumsalze) oder Ammoniumsalze, oder auch als Erdalkalisalze wie Magnesiumsalze verwendet werden, wie C₁₂/C₁₄-Fettalkohol-diglykolethersulfat-Natrium (Genapol^{®} LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende (C₁₀- C₁₈)-, vorzugsweise (C₁₀-C₁₄)-Fettalkohol-Polyglykolether (z.B. Isotridecylalkohol-Polyglykolether) z.B. aus der Genapol^{®} X-Reihe wie Genapol^{®} X-030, Genapol^{®} X-060, Genapol^{®} X-080 oder Genapol^{®} X-150 (alle von Fa. Clariant).

Die herbizide Wirkung kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z. B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuten erhalten werden, wie sie z.B. in Ölen aus ölliefemden Pflanzenarten enthalten sind, oder C₁-C₂₀-Alkyl-C₁₀C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-G₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlertstoffatomen, z.B. Erucasäure, Laurinsäure, Palmitinsäure und insbesondere C_{1B}-Fettsäuren wie Stearinsäure, Ölsäure, Linolsäure oder Linolensäure.

Die Pflanzenöle können in den erfindungsgemäßen Kombinationen z.B. in Form kommerziell erhältlicher ölhaltiger Formutierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Mero^{®} (Bayer CropScience, Deutschland, nachfolgend Mero genannt, Hauptbestandteil: Rapsölmethylester) enthalten sein.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe A) und B) können gemeinsam oder getrennt auf die Pflanzen, Pflanzenteile, Pflanzensamen oder die Fläche auf der die Pflanzen wachsen (z.B. die Anbaufläche) ausgebracht werden, vorzugsweise auf die grünen Pflanzen und Pflanzenteile und gegebenenfalls zusätzlich auf die Anbaufläche. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame Formulierung der Wirkstoffe der erfindungsgemäßen Herbizid-Azol-Kombination hat den Vorteil der leichteren Anwendbarkeit, weil die Mengen der Komponenten bereits im richtigen Verhältnis zueinander eingestellt sind. Außerdem können die Zusatzstoffe in der Formulierung aufeinander optimal abgestimmt werden, während ein Tank-mix von unterschiedlichen Formulierungen unerwünschte Kombinationen von Zusatzstoffen ergeben kann.

### A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.
b) Ein in Wasser leicht dispergierbares, benetzbares Pulver wird erhalten, indem man 25 Gew.-Teile eines Wirkstoffs/Wirkstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gew.-Teile eines Wirkstoffs/Wirkstoffgemischs mit 6 Gew.-Teilen Alkylphenolpolyglykolether (7Triton^{®}**X** 207), 3 Gew.-Teilen Isotridecanolpolyglykolether (8 EO) und 71 Gew.-Teilen paraffinischem Mineralöl (Siedebereich z.B. ca. 255 bis 277EC) mischt und in einer Reibkugelmühle auf eine Feinheit von unter 5 Mikron vermahlt.
d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.
e) Ein in Wasser dispergierbares Granulat wird erhalten indem man
   75 Gew.-Teile eines Wirkstoffs/Wirkstoffgemischs,
   10 Gew.-Teile ligninsulfonsaures Calcium,
   5 Gew.-Teile Natriumlaurylsulfat,
   3 Gew.-Teile Polyvinylalkohol und
   7 Gew.-Teile Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   25 Gew.-Teile eines Wirkstoffs/Wirkstoffgemischs,
   5 Gew.-Teile 2,2'-dinaphthylmethan-6,6'-disulfonsaures Natrium,
   2 Gew.-Teile oleoylmethyltaurinsaures Natrium,
   1 Gew.-Teil Polyvinylalkohol,
   17 Gew.-Teile Calciumcarbonat und
   50 Gew.-Teile Wasser
   auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

### B, Biologische Beispiele

Herbizide Wirkung (Gewächshausversuche)

Die Samen von typischen Schadpflanzen und von typischen Getreidepflanzen wurden ausgelegt, zum Auflaufen gebracht und unter Gewächshausbedingungen herangezogen. Die Behandlung mit den erfindungsgemäßen Mitteln erfolgte nach dem Auflaufen der Schadpflanzen in der Regel im 2 bis 4-Blattstadium in verschiedenen Dosierungen mit einer Wasseraufwandmenge von umgerechnet 300 I/ha.

Nach der Anwendung (ca. 4 Wochen nach Applikation) wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Pflanzen abgestorben; 50 % Wirkung = 50% der Pflanzen und grünen Pflanzenteile abgestorben; 0 % Wirkung = keine erkennbare Wirkung = wie Kontrollparzelle).

Die Ergebnisse sind in den nachfolgenden Tabellen angegeben, wobei in Klammem die Wirkung bei unabhängiger Anwendung der Wirkstoffe A) und B) angegeben ist und gAS/ha bedeutet Gram Aktivsubstanz pro Hektar.

**Beispiel 1:**

| Wirkstoff(e) | gAS/ha | Alopecurus myosuroidis % Wirkung | Lolium multiflorum % Wirkung | Weizen % Schäden |
|---|---|---|---|---|
| A)(A1.1)^{s} | 10 | 83 | 30 | 25 |
| B) Epoxiconazole | 125 | 0 | 0 | 0 |
| | 250 | 0 | 0 | 0 |
| A)+B) | 10+125 | 96(83+0) | 70(30+0) | 15(0+25) |
| | 10 + 250 | 98 (83+ 0) | 70 (30 + 0) | 20 (0 + 25) |

| | | | | |
|---|---|---|---|---|
| (A1.1)^{s} = Mesosulfuron-methyl (A1.1) + Mefenpyr-diethyl (S1-1) im Gewichtsverhältnis 1:3 | | | | |

## Patentansprüche

1. Herbizid-Azol-Kombination mit einem Gehalt an Komponenten (A) und (B), wobei
(A) ein oder mehrere herbizide Wirkstoffe aus der Gruppe der ALS-Inhibitoren bedeutet, und
(B) ein oder mehrere agrochemisch wirksame Azol-Verbindungen aus der Gruppe der Triazole, Pyrazole und Triazolinthione bedeutet.

2. Herbizid-Azol-Kombination nach Anspruch 1 , worin als Komponente (A) enthalten sind, einer oder mehrere herbizide Wirkstoffe ausgewählt aus der Gruppe der lmidazolinone, Pyhmidinytoxy-pyridincarbonsäure-Derivaie,
Pyrimidinyloxybenzoesäure-Derivate und Sulfonamide, vorzugsweise aus der Gruppe todosulfuron-methyl (A1.1), lodosulfuron-methyl-Natrium (A1.2), Mesosulfuron-methyl (A2.1), Mesosulfuron-methyl-Natrium (A2.2), Flucarbazone (A4.1), Flucarbazone-Natrium (A4.2), Propoxycarbazone (A5.1) und Propoxycarbazone-Natrium (A5.2).

3. Herbizid-Azol-Kombination nach Anspruch 1 oder 2, worin als Komponente B) enthalten sind, einer oder mehrere agrochemische Wirkstoffe ausgewählt aus der Gruppe Cyproconazole (B3), Epoxiconazole (B8), Fluquinconazole (B11), Propiconazole (B20), Prothioconazole (B21), Tebuconazole (B24) und Myclobutanil (B35).

4. Herbizid-Azol-Kombination gemäß einem oder mehreren der Ansprüche 1 bis 3, zusätzlich enthaltend eine oder mehrere weitere Komponenten aus der Gruppe bestehend aus agrochemischen Wirkstoffen anderer Art, im Pflanzenschutz üblichen Zusatzstoffen und Formulierungshilfsmittel.

5. Verfahren zur Bekämpfung von Schadpflanzen, worin die Komponenten der Herbizid-Azol-Kombination, definiert gemäß einem oder mehreren der Ansprüche 1 bis 4, gemeinsam oder getrennt auf die Pflanzen, Pflanzenteile, Pflanzensamen oder die Fläche, auf der die Pflanzen wachsen, appliziert werden.

6. Verfahren nach Anspruch 5 zur selektiven Bekämpfung von Schadpflanzen in Pflanzenkulturen.

7. Verfahren nach Anspruch 6 zur Bekämpfung von Schadpflanzen in monokotylen Pflanzenkulturen,

8. Verfahren nach Anspruch 6 oder 7, worin die Pflanzenkulturen gentechnisch verändert oder durch Mutationsselektion erhalten sind.

9. Verwendung der nach einem der Ansprüche 1 bis 4 definierten Herbizid-Azol-Kombination zur Bekämpfung von Schadpflanzen.
